# EUROPEAN PATENT SPECIFICATION

(11) **EP 2 956 790 B1**
(45) Date of publication and mention of the grant of the patent: **30.11.2016**
(21) Application number: 14709019.5
(22) Date of filing: 14.02.2014
(51) Int. Cl.: G01S 5/02, H04W 4/02

(54) **FOCUSED ASSISTANCE DATA FOR WIFI ACCESS POINTS AND FEMTOCELLS**
FOKUSSIERTE HILFSDATEN FÜR WIFI-ZUGANGSPUNKTE UND FEMTOZELLEN
DONNÉES D'ASSISTANCE DIRIGÉE POUR DES POINTS D'ACCÈS WIFI ET FEMTOCELLULES

(30) Priority: 16.02.2013 US 201361765713 P; 14.03.2013 US 201313828835; 13.02.2014 US 201414179938
(43) Date of publication of application: 23.12.2015
(73) Proprietor: QUALCOMM Incorporated, San Diego CA 92121-1714 (US)
(72) Inventor: EDGE, Stephen William, San Diego, California 92121-1714 (US); WACHTER, Andreas Klaus, San Diego, California 92121-1714 (US)
(74) Representative: Schmidbauer, Andreas Konrad
(86) International application number: PCT/US2014/016496
(87) International publication number: WO 2014/127246

(56) References cited:
- WO-A1-2011/019917
- US-A1- 2006 240 840
- US-A1- 2008 176 583
- US-A1- 2009 280 775

## Description

### CROSS-REFERENCE TO RELATED APPLICATIONS

This application claims the benefit of and priority to U.S. Application No. 14/179,938, filed February 13, 2014, entitled "Focused assistance data for WiFi access points and Femtocells," which, in turn, is a continuation-in-part of and claims the benefit of and priority under 35 U.S.C. §120 to U.S. Application No. 13/828,835, filed March 14, 2013, entitled "Focused assistance data for WiFi access points and Femtocells," which, in turn, claims the benefit of and priority under 35 U.S.C. §119(e) to U.S. Provisional Application No. 61/765,713, filed February 16, 2013, entitled "Focused assistance data for WiFi access points and Femtocells," which are all assigned to the assignee hereof and incorporated herein by reference.

### BACKGROUND

### I. Field of the Invention

This disclosure relates generally to systems, apparatus and methods for position location of a mobile device, and more particularly to narrowing a list of access points based on information related to a rough position of a mobile device, thereby more quickly detecting visible access points by a mobile device, which leads to a faster time-to-first position fix.

### II. Background

Positioning support for location based on WiFi and Femtocell measurements by a mobile device is defined in the OMA LPPe positioning protocol. Some other widely used positioning protocols other than LPPe such as LPP, RRLP, RRC, IS-801 do not contain support for WiFi centric positioning and only allow Femtocell centric positioning without special enhancement. As background, reference is made to the following definitions, acronyms and abbreviations:

**Table 1 - Abbreviations**

| | |
|---|---|
| 3GPP | 3rd Generation Partnership Project |
| AD | Assistance Data |
| AP | Access Point |
| E-SMLC | Enhanced SMLC |
| IEEE | Institute of Electrical and Electronics Engineers |
| LPP | LTE Positioning Protocol |
| LPPe | LPP Extensions |
| LTE | Long Term Evolution |
| MAC | Media Access Control |
| MPC | Mobile Position Center |
| MS | Mobile Device |
| PDE | Position Determining Entity |
| OMA | Open Mobile Alliance |
| OWT | One-way Time |
| RF | Radio Frequency |
| RSSI | Received Signal Strength Indication |
| RTT | Round-trip Time |
| SAS | Standalone SMLC |
| SLP | SUPL Location Platform |
| SMLC | Serving Mobile Location Center |
| SUPL | Secure User Plane Location |
| UE | User Equipment |
| ULP | UserPlane Location Protocol |
| WiFi AP | An AP based on the IEEE 802.11 family of standards |
| WLAN | Wireless Local Area Network |
| WWAN | Wireless Wide Area Network |

A problem with current support for WiFi and Femtocell centric positioning using LPPe is that assistance data (AD) sent to a UE by a location server for WiFi access points and Femtocells may include a large number of access points in the assistance data. The large number of access points in the assistance data may not be refined or filtered specific to a current position of a particular mobile device. That is, the assistance data for the large number of access points may be independent of which access points are more likely to be receivable or beneficial to positioning of the mobile device. For example, a large building or other structure (e.g., an office building, a shopping mall, an airport, a municipal center or an enterprise building) may contain a large number (e.g., hundreds) of access points, data for which may be communicated to a mobile device by a location server such as a SUPL SLP via an assistance data message. In one example, a location server (e.g., a SUPL SLP) provides to the mobile device positioning assistance data related to a large number of access points.

Typically, at any location within a building or structure, a mobile device will only be able to receive and measure signals from some small fraction of any large number of access points that are present inside the building or structure. However, unless the mobile device can already determine (e.g., from provided access point (AP) location coordinates and an accurate estimate of the mobile device's own location) which access points are nearest to the mobile device, the mobile device will not generally know which access points it will be able to detect and measure. Additionally, even when a mobile device does determine which access points are nearby, the presence of walls, floors and corridors in a building may mean that some nearby access points may not be detectable whereas other access points further away may be detectable due to good radio propagation conditions (e.g., such as that provided by an access point at the far end of a long corridor). A further problem may be that a mobile device is able to receive signals from WiFi APs from predominantly one direction only (e.g., APs along or nearby to a long corridor or walkway in a building when the mobile device is at one end of the corridor or walkway). If the mobile device only measures signals from APs from this one direction, the poor geometry of the APs relative to the mobile device may significantly magnify any measurement errors and errors in AP location coordinates resulting in a higher location error for the mobile device.

What is needed is a way to filter assistance data for a large number of access points into assistance data for a smaller number of access points that are more likely to be detectable by a mobile device and/or more likely to enable accurate positioning of the mobile device.

Attention is drawn to US 2008/176583 A1 describing methods and systems for selecting and providing a relevant subset of Wi-Fi location information to a mobile client device so the client device may estimate its position with efficient utilization of resources. A method of providing a relevant subset of information to a client device is based in part on scanning for Wi-Fi access points within range of the client device, using a Wi-Fi database that covers a large target region to retrieve information about these access points, using this information to estimate the position of the mobile client device, selecting a limited region in the vicinity of the estimated location of the client device, and providing information about Wi-Fi access points within this limited region to the client. For efficient transfer and maintenance of data, the target region may be divided into a hierarchy of fixed geographical tiles.

### BRIEF SUMMARY

In accordance with the present invention methods, a mobile device and a location server, as set forth in the independent claims, respectively, are provided. Preferred embodiments of the invention are described in the dependent claims.

Disclosed are systems, apparatus and methods for narrowing a search list of access points based on information related to a rough position of a mobile device. A mobile device applies the narrowed list to its access point search algorithm to more quickly find available and suitable access points. Once the access points are detected, the mobile device or network may use measurements of signals communicated between these access points and the mobile device to determine a position fix, thereby reducing a time-to-first fix for the mobile device and/or improving location accuracy.

According to some aspects, disclosed is a method in a mobile device for determining a position fix from a wireless network, the method comprising: receiving assistance data from a location server for a first set of access points (APs) wherein the assistance data comprises relationships for the APs; determining location information for the mobile device; determining a second set of APs based on the relationships and the location information; obtaining location measurements for the second set of APs; and determining a location estimate based on the location measurements.

According to some aspects, disclosed is a mobile device for determining a position fix in a wireless network, the mobile device comprising: a wireless transceiver configured to receive assistance data from a location server for a first set of access points (APs) wherein the assistance data comprises relationships for the APs; and a processor coupled to the wireless transceiver and configured to: determine location information for the mobile device; determine a second set of APs based on the relationships and the location information; obtain location measurements for the second set of APs; and determine a location estimate based on the location measurements.

According to some aspects, disclosed is a mobile device for determining a position fix in a wireless network, the mobile device comprising: means for receiving assistance data from a location server for a first set of access points (APs) wherein the assistance data comprises relationships for the APs; means for determining location information for the mobile device; means for determining a second set of APs based on the relationships and the location information; means for obtaining location measurements for the second set of APs; and means for determining a location estimate based on the location measurements.

According to some aspects, disclosed is a non-transitory computer-readable storage medium including program code stored thereon for a mobile device to determine a position fix in a wireless network, the non-transitory computer-readable storage medium comprising program code to: receive assistance data from a location server for a first set of access points (APs) wherein the assistance data comprises relationships for the APs; determine location information for the mobile device; determine a second set of APs based on the relationships and the location information; obtain location measurements for the second set of APs; and determine a location estimate based on the location measurements.

According to some aspects, disclosed is a method in a location server for providing assistance data for access points (APs) to a mobile device, the method comprising: determining a first set of APs; determining relationships for the first set of APs; and sending assistance data to the mobile device for the first set of APs, wherein the assistance data comprises the relationships.

According to some aspects, disclosed is a location server for providing assistance data for access points (APs) to a mobile device, the location server comprising: a processor configured to: determine a first set of APs; and determine relationships for the first set of APs; and a transceiver coupled to the processor and configured to send assistance data to the mobile device for the first set of APs, wherein the assistance data comprises the relationships.

According to some aspects, disclosed is a location server for providing assistance data for access points (APs) to a mobile device, the location server comprising: means for determining a first set of APs; means for determining relationships for the first set of APs; and means for sending assistance data to the mobile device for the first set of APs, wherein the assistance data comprises the relationships.

According to some aspects, disclosed is a non-transitory computer-readable storage medium including program code stored thereon for a location server to provide assistance data for access points (APs) to a mobile device, the non-transitory computer-readable storage medium comprising program code to: determine a first set of APs; determine relationships for the first set of APs; and send assistance data to the mobile device for the first set of APs, wherein the assistance data comprises the relationships.

It is understood that other aspects will become readily apparent to those skilled in the art from the following detailed description, wherein it is shown and described various aspects by way of illustration. The drawings and detailed description are to be regarded as illustrative in nature and not as restrictive.

### BRIEF DESCRIPTION OF THE DRAWING

Embodiments of the invention will be described, by way of example only, with reference to the drawings.
FIG. 1 shows a system including a mobile device, GNSS satellites, an access point, a base device, an access point (AP) and a location server, in accordance with some embodiments.
FIG. 2A shows a mobile device and its components, in accordance with some embodiments.
FIG. 2B shows an access point and some of its components, in accordance with some embodiments.
FIG. 2C shows part of an indoor area wherein a number of access points provide communication services and location support to mobile devices, in accordance with some embodiments.
FIG. 2D shows a set of linked access points, in accordance with some embodiments.
FIGS. 3 and 4 each show a set of linked access points, in accordance with some embodiments.
FIG. 5 shows two groups of access points, in accordance with some embodiments.
FIG. 6 shows a geographic coverage area for an example macrocell and fours APs that are within the coverage area, in accordance with some embodiments.
FIG. 7 shows a method 300 of messaging between a mobile device and a location server, in accordance with some embodiments.
FIGS. 8 and 9 show methods, in accordance with some embodiments.
FIG. 10 shows a location server for determining a position fix of a mobile device in a wireless network, in accordance with some embodiments.

### DETAILED DESCRIPTION

The detailed description set forth below in connection with the appended drawings is intended as a description of various aspects of the present disclosure and is not intended to represent the only aspects in which the present disclosure may be practiced. Each aspect described in this disclosure is provided merely as an example or illustration of the present disclosure, and should not necessarily be construed as preferred or advantageous over other aspects. The detailed description includes specific details for the purpose of providing a thorough understanding of the present disclosure. However, it will be apparent to those skilled in the art that the present disclosure may be practiced without these specific details. In some instances, well-known structures and devices are shown in block diagram form in order to avoid obscuring the concepts of the present disclosure. Acronyms and other descriptive terminology may be used merely for convenience and clarity and are not intended to limit the scope of the disclosure.

Position determination techniques described herein may be implemented in conjunction with various wireless communication networks such as a wireless wide area network (WWAN), a wireless local area network (WLAN), a wireless personal area network (WPAN), and so on. The term "network" and "system" are often used interchangeably. A WWAN may be a Code Division Multiple Access (CDMA) network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, Long Term Evolution (LTE), and so on. A CDMA network may implement one or more radio access technologies (RATs) such as cdma2000, Wideband-CDMA (W-CDMA), and so on. Cdma2000 includes IS-95, IS-2000, and IS-856 standards. A TDMA network may implement Global System for Mobile Communications (GSM), Digital Advanced Mobile Phone System (D-AMPS), or some other RAT. GSM, W-CDMA and LTE are described in documents from a consortium named "3rd Generation Partnership Project" (3GPP). Cdma2000 is described in documents from a consortium named "3rd Generation Partnership Project 2" (3GPP2). 3GPP and 3GPP2 documents are publicly available. A WLAN may be an IEEE 802.11x network, and a WPAN may be a Bluetooth network, an IEEE 802.15x, or some other type of network. The techniques may also be implemented in conjunction with any combination of WWAN, WLAN and/or WPAN.

A satellite positioning system (SPS) typically includes a system of transmitters positioned to enable entities to determine their location on or above the Earth based, at least in part, on signals received from the transmitters. Such a transmitter typically transmits a signal marked with a repeating pseudo-random noise (PN) code of a set number of chips and may be located on ground based control devices, user equipment and/or space vehicles. In a particular example, such transmitters may be located on Earth orbiting satellite vehicles (SVs). For example, a SV in a constellation of Global Navigation Satellite System (GNSS) such as Global Positioning System (GPS), Galileo, GLONASS or Compass may transmit a signal marked with a PN code that is distinguishable from PN codes transmitted by other SVs in the constellation (e.g., using different PN codes for each satellite as in GPS or using the same code on different frequencies as in GLONASS). In accordance with certain aspects, the techniques presented herein are not restricted to global systems (e.g., GNSS) for SPS. For example, the techniques provided herein may be applied to or otherwise enabled for use in association with various regional systems, such as, e.g., Quasi-Zenith Satellite System (QZSS) over Japan, Indian Regional Navigational Satellite System (IRNSS) over India, Beidou over China, etc., and/or various augmentation systems (e.g., an Satellite Based Augmentation System (SBAS)) that may be associated with or otherwise enabled for use with one or more global and/or regional navigation satellite systems. By way of example but not limitation, an SBAS may include an augmentation system(s) that provides integrity information, differential corrections, etc., such as, e.g., Wide Area Augmentation System (WAAS), European Geostationary Navigation Overlay Service (EGNOS), Multi-functional Satellite Augmentation System (MSAS), GPS Aided Geo Augmented Navigation or GPS and Geo Augmented Navigation system (GAGAN), and/or the like. Thus, as used herein an SPS may include any combination of one or more global and/or regional navigation satellite systems and/or augmentation systems, and SPS signals may include SPS, SPS-like, and/or other signals associated with such one or more SPS.

As used herein, a mobile device, sometimes referred to as a mobile station (MS), user equipment (UE) or SUPL Enabled Terminal (SET), may comprise a cellular phone, mobile phone, smartphone, tablet or other wireless communication device, personal communication system (PCS) device, personal navigation device (PND), Personal Information Manager (PIM), Personal Digital Assistant (PDA), laptop or other suitable mobile device which is capable of receiving wireless communication and/or navigation signals. The term "mobile device" is also intended to include devices which communicate with a personal navigation device (PND), such as by short-range wireless, infrared, wireline connection, or other connection - regardless of whether satellite signal reception, assistance data reception, and/or position-related processing occurs at the device or at the PND. Also, "mobile device" is intended to include all devices, including wireless communication devices, computers, laptops, etc. which are capable of communication with a server, such as via the Internet, WiFi, WWAN or other network, and regardless of whether satellite signal reception, assistance data reception, and/or position-related processing occurs at the device, at a server, or at another device associated with the network. Any operable combination of the above are also considered a "mobile device."

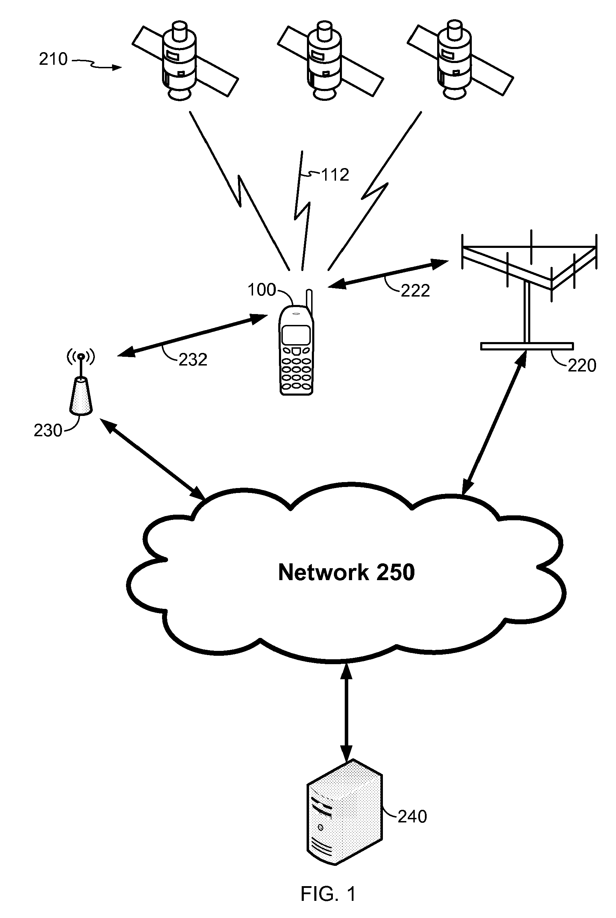

FIG. 1 shows a system including a mobile device 100, GNSS satellites 210, a base device 220, an access point (AP) 230, and a location server 240, in accordance with some embodiments. The mobile device 100 receives signals 112 from GNSS satellites 210. The signals 112 may be used to compute a position fix. The mobile device 100 also communicates with the base device 220 using signals 222 and with the access point 230 using signals 232. In addition, the mobile device 100 may communicate with the location server 240 through a network 250, such as a WWAN, WLAN, the Internet or a private network, via either the base device 220 or the access point 230. Base device 220 and access point 230 may be part of network 230. Base device 220 may support cdma2000, GSM, W-CDMA, LTE or some other cellular wireless communication. AP 230 may support IEEE 802.11x, Bluetooth or some other WLAN communication or may be a Femtocell or home base device that supports communication according to a WWAN wireless technology such as GSM, W-CDMA, LTE or cdma2000. Network 250, location server 240 and/or mobile device 100 may support location of mobile device 100 according to a control plane location solution defined by 3GPP (e.g., in 3GPP Technical Specification (TS) 23.271) for GSM access (e.g., according to 3GPP TS 43.059), W-CDMA access (e.g., according to 3GPP TS 25.305) or LTE access (e.g., according to 3GPP TS 36.205) in the case that network 250 supports GSM, W-CDMA or LTE access, respectively. In this case, location server 240 may be an SMLC in the case of GSM access, an SAS in the case of W-CDMA access or an E-SMLC in the case of LTE access. Network 250, location server 240 and/or mobile device 100 may support location of mobile device 100 according to a control plane location solution defined by 3GPP2 for cdma2000 access (e.g., according to 3GPP2 TS X.S0002) in the case that network 250 supports cdma2000 access. In this case, location server 240 may be a PDE and/or an MPC. Location server 240 and mobile device 100 may support location of mobile device 100 according to the SUPL user control plane location solution defined by OMA for multiple wireless and wireline access types including cdma2000, GSM, W-CDMA, LTE, WiFi and Bluetooth. In this case, location server 240 may be a SUPL SLP.

As part of support of a 3GPP control plane location solution, a 3GPP2 control plane location solution or the OMA SUPL user plane location solution, location server 240 and mobile device 100 may support positioning of mobile device 100 using measurements made by mobile device 100 of signals detected and received by mobile device 100 from one or more APs such as AP 230. For example mobile device 100 may measure a received signal strength indication (RSSI), a received signal to noise ratio (S/N) and/or a round trip signal propagation time (RTT) for one or more APs in network 250 such as AP 230 and/or one or more APs in other networks. A position estimate for mobile device 100 may be determined by mobile device 100 or by location server 240 using such measurements. For example, mobile device 100 or location server 240 may be able to estimate the distance between mobile device 100 and each measured AP using the measured RSSI, S/N and/or RTT for the measured AP thereby enabling location of mobile device 100 via intersection of circles around each AP of radius equal to the estimated AP to mobile device distance. Alternatively or in addition, data may be available to location server 240 (e.g., based on previous measurements or calculation) concerning the expected RSSI, S/N and/or RTT values that a mobile device 100 would measure at a number of different locations (e.g., locations arranged on a rectangular grid) enabling mobile device 100 or location server 240 to estimate a location for mobile device 100 based on comparing a set of measurement values made by mobile device 100 to a set of expected measurement values for each of a number different candidate locations and, for example, finding a location with a close match between the 2 sets of measurement values.

As part of location determination using measurements of an AP such as AP 230 by mobile device 100, location server 240 may provide assistance data to mobile device 100 concerning APs that mobile device 100 may need to measure or be able to measure at its current location. This AP related assistance data may be provided using the LPPe positioning protocol that is defined by OMA in the case that a control plane location solution defined by 3GPP or 3GPP2 is used or if the OMA SUPL location solution is used. Alternatively or in addition, the AP related assistance data may be provided using the SUPL ULP protocol in the case that the SUPL location solution is used. The AP related assistance data may comprise the identities or addresses of APs that may be nearby to mobile device 100 (e.g., the MAC addresses in the case of WiFi APs or cell global identities or physical cell identities in the case of GSM, W-CDMA, LTE or cdma2000 Femtocells). The assistance data may further comprise the frequency or frequencies supported by each AP, the channels supported by each AP (e.g., for WiFi APs), the type of wireless technology supported including particular subtypes (such as whether a WiFi AP supports 802.11b, 802.11g, 802.11b, 802.11n etc.). The assistance data may also comprise the location coordinates (e.g., latitude, longitude and altitude, or a civic address or X,Y,Z coordinates) for each AP if mobile device 100 may compute its own location. The number of APs for which assistance data is provided by location server 240 to mobile 100 using LPPe, SUPL or other means may be very extensive if the location of mobile device 100 is not known approximately or if there are a large number of APs in the general vicinity of mobile device 100. It may not then be possible for mobile device 100 to determine how many APs to attempt to measure and which APs to measure, which may delay measurements and/or lead to less accurate location of mobile device 100 (e.g., if mobile device 100 measures signals from APs in predominantly one direction or measures signals from APs where signal attenuation and multipath lead to high measurement errors). A means to refine the number of APs being measured into a small and optimized list may therefore be beneficial.

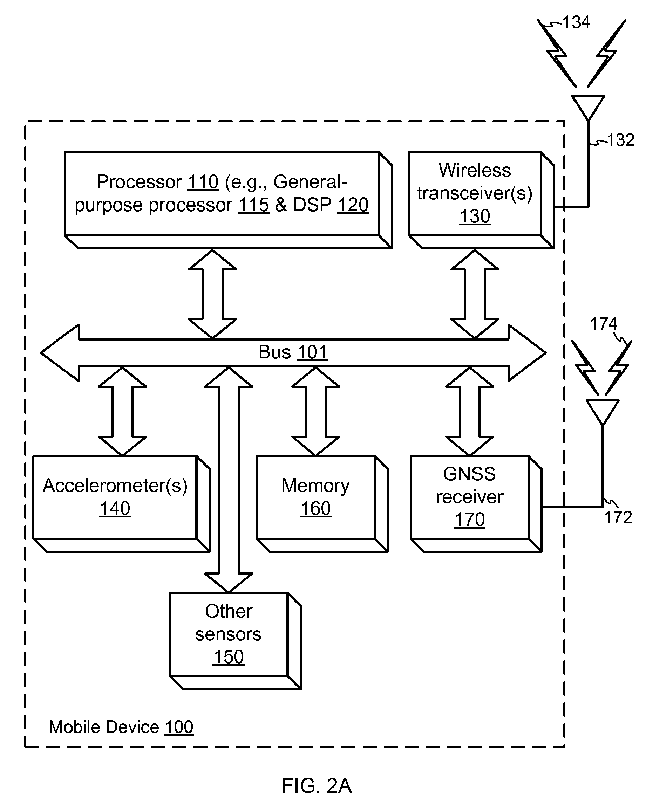

FIG. 2A shows a mobile device 100 and its components, in accordance with some embodiments. The mobile device 100 includes a processor 110 (e.g., a general-purpose processor 115 and/or a digital signal processor (DSP 120)), one or more wireless transceivers 130 electrically connected to an antenna 132 to communicate signals 134, one or more accelerometers 140, other sensors 150 (e.g., a gyroscope, magnetometer and/or a barometer), memory 160 and a GNSS receiver 170 electrically connected to an antenna 172 to receive signals 174. These components may be coupled together with bus 101 (as shown), directed connected together, or a combination of both. The memory 160 may contain executable code or software instructions for the processor 110 to perform methods described herein. The wireless transceiver 130 may be configured to receive assistance data for one or more APs, such as AP 230, from a location server such as location server 240. The assistance data may be based on information related to the position of mobile device 100 (e.g., an approximation location estimate for mobile device 100 or an AP 230 or macrocell detected by mobile device 100) and may provide data (e.g., AP address, coordinates, supported wireless technologies etc.) for a provided set of access points that are nearby to mobile device 100. The assistance data may include linked APs, grouped APs or associated APs as described below. The processor 110 may be coupled to the wireless transceiver 130 and configured to determine information related to the position of mobile device 100 and configured to determine a reduced set of access points based on the provided set of access points.

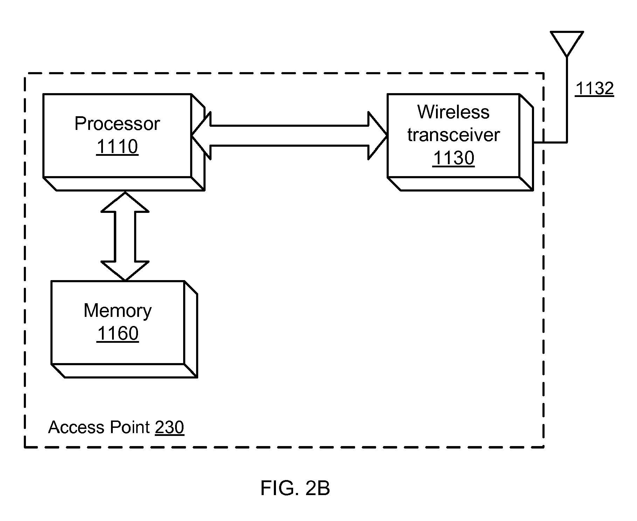

FIG. 2B shows an access point 230 and some of its components, in accordance with some embodiments. The access point 230 contains a processor 1110, memory 1160 and a wireless transceiver 1130 connected to antenna 1132. The wireless transceiver 1130 is configured to transmit signals to mobile devices, such as mobile device 100, which may be measured by a mobile device to help determine the location of the mobile device.

Knowing which access points 230 should be detectable and measured may assist and speed up signal acquisition and signal measurement by a mobile device such as mobile device 100 and/or improve location accuracy. A location server 240 may provide to a mobile device 100 assistance data related to access points 230 in the general vicinity of mobile device 100 and provide such information as the frequencies, channels and/or radio technologies used by each AP, the address of each AP, the location coordinates of each AP, RF heat maps for each AP etc. The assistance data may also enable a mobile device 100 to determine which APs to detect and measure and/or when to stop looking for APs and/or when to start looking for APs. As an example of the latter, if a mobile device 100 was informed via assistance data that at some location, six access points should be detectable, it might continue looking for more access points after detecting just two or three access points, however, it might decide to stop looking after detecting five or six access points. LPPe currently does not provide support for such improved WiFi access point and Femtocell acquisition.

As an example of a positioning protocol that may be used to provide assistance data related to APs from a location server to a mobile device, the present disclosure focuses on the OMA LPPe protocol. Embodiments of the present invention may equally apply to other positioning protocols such as protocols defined by 3GPP, 3GPP2, IEEE, IETF and to location solutions such as SUPL. Embodiments may enable a mobile device 100 to determine which access points 230 should be detectable when at a new location. Various embodiments provide one or more of the following types of improved assistance data and improved measurement information related to APs: (1) linked APs; (2) grouped APs; (3) associated APs; and (4) feedback on APs. Other embodiments provide geometric related support that may enable a mobile device 100 to measure signals from APs not just from one direction but from multiple different directions. Individual access points may be identified by an access identifier, SSID, a MAC address, cell identity, cell global identity and/or a physical cell address. Embodiments may be limited to indoor environments or may also include outdoor environments.

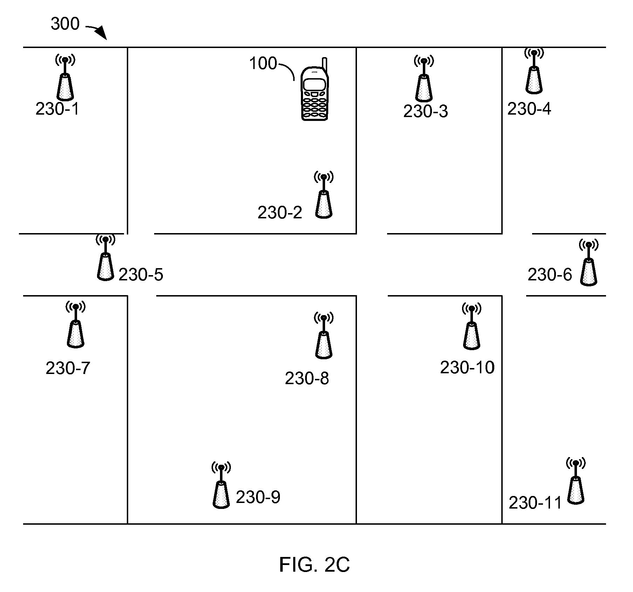

FIG. 2C shows part of an indoor area 300 wherein a number of access points 230-1 through 230-11 provide communication services and location support to mobile devices such as mobile device 100, in accordance with some embodiments. The lines represent walls and may partly impede (e.g., attenuate and/or reflect) RF transmissions between the APs 230-1 through 230-11 and mobile device 100. Indoor area 300 may represent part of a convention center, hospital, airport, library etc., with significant floor space and possibly multiple floors wherein the total number of deployed APs is high (e.g., significantly more than the 11 APs shown in FIG. 2C). It may be advantageous for mobile device 100 to measure signals from only certain APs in FIG. 2C in order to determine its location rather than from all APs in FIG. 2C or all APs in the whole building or structure of which indoor area 300 may just be a part. For example, signals from AP 230-2 may be received by mobile device 100 with higher signal strength than signals from other APs because AP 230-2 is in the same room or same open area as mobile device 100 and is closer to mobile device 100 than most of the other APs. However, measurement of signals from AP 230-2 alone may not be sufficient to locate mobile device 100 accurately because while a distance might be computed between mobile device 100 and AP 230-2 there may be no way to determine the direction or orientation of mobile device 100 relative to AP 230-2. Hence mobile device 100 may need to measure signals from other APs. Good candidate APs may be APs 230-1, 230-3 and 230-5 because these APs are all separated from mobile device 100 by only one wall and therefore may provide sufficient signal strength to enable accurate location related measurements (e.g., RSSI, S/N and/or RTT measurements). Other APs shown in FIG. 2C might also be measured by mobile device 100 depending on their distance from mobile device 100 and the number of intervening walls. However, a location server (e.g., location server 240) will generally not know the exact location of mobile device 100 *a priori* and thus will not know which APs mobile device 100 should measure. Thus a location server 240 may provide assistance data for APs 230-1 to 230-11 and for other APs leading to poorer location results (e.g., longer delay and/or less accurate location). Moreover, mobile device 100 may need to expend more battery power in measuring these additional APs. For example, if mobile device 100 measures signals from APs 230-10 and 230-11 in FIG. 2C and not from APs 230-1 and 230-3, the weaker signals (with a greater possibility of signal multipath) may produce less accurate location results.

The embodiments described below provide ways for a location server 240 to indicate to a mobile device 100 which APs should be measured without requiring the location server 240 to know *a priori* exactly where the mobile device 100 is located. The embodiments make use of relationships for APs that may comprise links between APs, membership of APs within a common group and association of APs with macrocells.

### Linked APs

In a first embodiment, a server provides links between APs in assistance data provided to a mobile device. In this embodiment, the relationships for APs comprise the links between APs and minimally comprise a link from one AP to another AP. The links indicate which access points 230 should be visible, or should be measured for any location determination of the mobile device, given that certain other access points 230 are already known to be visible to a mobile device. A link from a first access point 230 to a second access point 230 may indicate the second access point 230 is often visible from an RF scan when the first access point 230 is visible. The first access point 230 may have links to several nearby access points 230 that are generally visible whenever the first access point 230 is visible. Generally, by providing links between APs, a server 240 can indicate to a mobile device 100 receiving a signal from a first access point 230 from which other access points 230 the mobile device 100 should also be able to receive signals. The links between APs may be present in a linked database in the location server 240 and/or may be generated by a location server 240 when it sends assistance data to mobile device 100 based on other information available to location server 240 (such as an indoor floor plan and the locations of APs relative to the floor plan). The links may also be generated based on an approximate known location for mobile device 100. For example, in the case of the indoor area 300 shown in FIG. 2C, the links could be generated based on knowledge that mobile device 100 is within or is probably within the upper part of the indoor area 300. Such knowledge could be obtained if mobile device 100 reports to location server 240 its current serving AP or one or more APs that have been detected by mobile device 100 (e.g., if mobile device 100 reports to location server 240 that mobile device 100 has detected AP 230-2 which is also in the upper part of the indoor area 300).

Links between APs that are provided to a mobile device 100 by a location server 240 may be unidirectional or bidirectional. Therefore, links need not be symmetric, for example, due to differing coverage area sizes for different access points 230. For example, assume a first access point 230 has a relatively small coverage area and a second access point 230 has a relatively large coverage area that encompasses the coverage area of the first access point. In this case, the location server 230 may provide a unidirectional link from the first access point 230 to the second access point 230 because the second access point 230 will normally be detected whenever the first access point is detected, but the second access point 230 may not have a link to the first access point 230 if the first access point is rarely seen when the second access point is seen.

In some embodiments, a location server 240 may only send to a mobile device 100 a subset of all APs present in an indoor area together with the links between the APs in order to reduce signaling, data storage and processing in the mobile device 100. For example, when a location server 240 has a linked database of APs (with the links between APs contained in the database), only a relevant subset of the linked database may be sent to the mobile device 100. In some embodiments where a linked database is used, a linked database may contain links that are symmetrical (e.g., a single link joins together two access points 230). In some embodiments, a linked database may contain links that are asymmetrical (e.g., a single link joins a first access point 230 to a second access point 230 but not vice versa). In some embodiments, a linked set of APs (e.g., which may be part or all of a linked database) may be sent to a mobile device 100 before it is needed or requested. In these embodiments, only a portion of a linked database may be sent. In other embodiments, a complete linked database (e.g., containing data for all APs in some building or indoor area in which a mobile device 100 may be located) may be sent by a location server 240 to a mobile device 100 and may be pared down by the mobile device 100 following receipt. In some embodiments, a location server 240 may only send to a mobile device 100 a set of APs that are all linked to one another (e.g., with each AP in the set linked to every other AP in the set). In this embodiment, the links may not be explicitly signaled to the mobile device 100. In some embodiments, linkages between access points 230 may be defined by including the access points 230 in a common set or group. In this embodiment, each access point 230 within any group or set may be considered to be bi-directionally linked to every other access point 230 in the same group or set. In some embodiments, the APs in a linked database may all be on the same floor of a building or all in the same portion of a building.

Table 2 shows example linkages between the APs shown in FIG. 2C where each AP shown in the first column is linked to the APs shown in the second column (e.g., with AP 230-2 in the third row shown as having links to APs 230-1, 230-3, 230-5 and 230-7). The linkages shown in Table 2 link each AP 230-A (left side of table) to at least one other AP 230-B (right side of table). If a mobile device receives signals via a line of sight (LOS) with no intervening walls from AP 230-A, the mobile device may also be able to receive signals from AP 230-B along a straight line through at most one intervening wall. For example, AP 230-1 is shown as having links to APs 230-2 and 230-5 in the second row of the table. These links signify that a mobile device 100 that receives signals from AP 230-1, that do not traverse any walls and are received via a LOS, would also, according to the layout in FIG. 2C, potentially be able to receive signals from AP 230-2 and/or from AP 230-5 sent in a straight line through at most one wall.

**Table 2 - Example Linkages between APs 230 in Indoor Area 300 in FIG. 2C**

| **AP** | **Other APs linked to the AP** |
|---|---|
| 230-1 | 230-2, 230-5 |
| 230-2 | 230-1, 230-3, 230-5, 230-7 |
| 230-3 | 230-2, 230-4, 230-6 |
| 230-4 | 230-3, 230-6, 230-10 |
| 230-5 | 230-1, 230-2, 230-3, 230-4, 230-6, 230-7, 230-8, 230-9, 230-10, 230-11 |
| 230-6 | 230-1, 230-2, 230-3, 230-4, 230-5, 230-7, 230-8, 230-9, 230-10, 230-11 |
| 230-7 | 230-5, 230-8, 230-9 |
| 230-8 | 230-5, 230-7, 230-9, 230-10 |
| 230-9 | 230-5, 230-7, 230-8, 230-10 |
| 230-10 | 230-8, 230-9, 230-11 |
| 230-11 | 230-6, 230-10 |

One rationale for the links exemplified in Table 2 is that an mobile device 100 is more likely to detect a nearby AP with direct LOS signal propagation before other APs because the signals would generally be stronger than for other APs and thereby more easily detected by a short scan. The mobile device 100 can then use the links provided from these initially detected APs to discover other APs not yet detected by mobile device 100 whose signals may then be detected and measured. However, other rules for defining linkages between APs instead of those exemplified in Table 2 could be used instead (e.g., the rules could be based on the distances between APs with APs nearby to one another being linked and/or could be based on the number of intervening walls between APs and/or on other criteria).

Linkages between APs could also be determined by or on behalf of a location server 240 in automated ways. For example, in one embodiment, an AP 230-A that can receive signals from another AP 230-B and is able to decode the identity of AP 230-B from the detected signals may provide the identity of AP 230-B to location server 240 or to another entity (e.g., an AP manager) that may lead to a link being determined from AP 230-A to AP 230-B. In a further embodiment, a link from AP 230-A to AP 230-B may only be determined if the signal strength or signal quality (e.g., RSSI or S/N) of AP 230-B measured by AP 230-A exceeds some threshold value. In another embodiment, a number of mobile devices 100 may provide data to a location server 240 (e.g., via crowdsourcing or when requested by location server 240 to provide measurements for the purpose of locating mobile device 100) that may include the identities (e.g., MAC addresses for WiFi APs or cell identities for Femtocells) of all the APs that mobile device 100 is able to currently detect (and/or may have detected at some common time in the past) and possibly the measured signal strength and/or signal quality (e.g., RSSI or S/N) for each detected AP. Location server 240 may then determine the identities of APs that are commonly detected by mobile devices 100 whenever any other AP 230-C is detected and may determine a link from the AP 230-C to each of these other commonly detected APs. In a further embodiment, location server 240 may only determine a link from any AP 230-C to some other AP 230-D if mobile devices 100 typically detects an RSSI and/or S/N for AP 230-D exceeding some threshold or thresholds whenever mobile devices 100 detects an RSSI and/or S/N for AP 230-C exceeding some threshold or thresholds. Such embodiments for automatically generating links between APs may assist a location server 240 to suitably link together a large numbers of APs in one or more different buildings, structures and other types of indoor area.

The linkages between APs may be indicated by a location server 240 to an MD 100 using assistance data defined in a positioning protocol such as LPPe. The linkages may be indicated in the form exemplified in Table 2, wherein for any first AP, a list of other APs linked to this AP is provided to the MD 100.

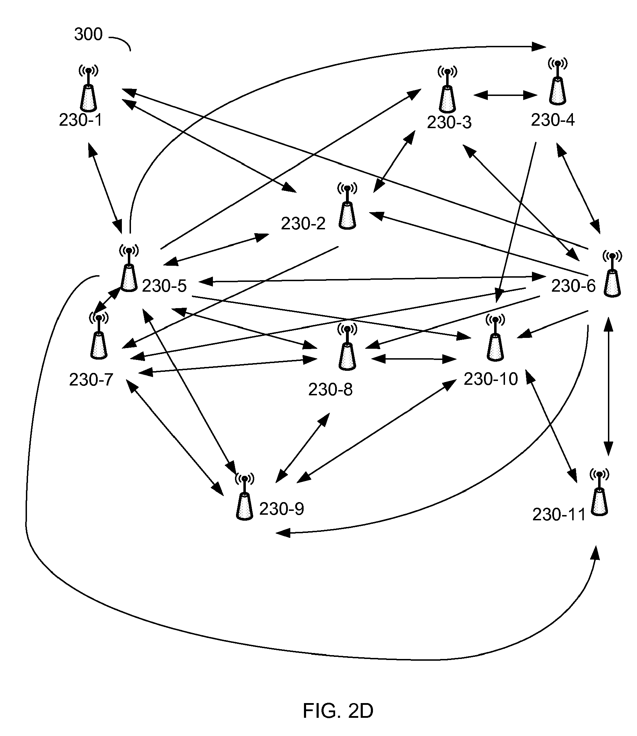

FIG. 2D shows a set of linked access points, in accordance with some embodiments. The figure provides a spatial illustration of the links between APs 230 as exemplified in Table 2. An AP 230-A that has a one-way (asymmetric) link to another AP 230-B is illustrated by a one-way arrow from AP 230-A to AP 230-B. In this case, AP 230-B would not have a link to AP 230-A. A symmetric link between two APs (where each AP has a link to the other AP) is shown by a double arrow between the two APs. For example, AP 230-6 has a one-way asymmetric link to AP 230-1, whereas APs 230-1 and 230-2 are linked symmetrically. The linkages may be complex even for a small number of APs. However, the links may be conveyed relatively simply by a location server 240 to a mobile device 100 using a tabular form such as in Table 2, by providing data equivalent to that in Table 2 (e.g., a list of APs to which any other AP has links), by defining links individually as pairs of APs where the first (or second AP) in the pair has a link to the other AP, or by providing pairs of APs and a direction where the direction indicates whether the link is one way or two way.

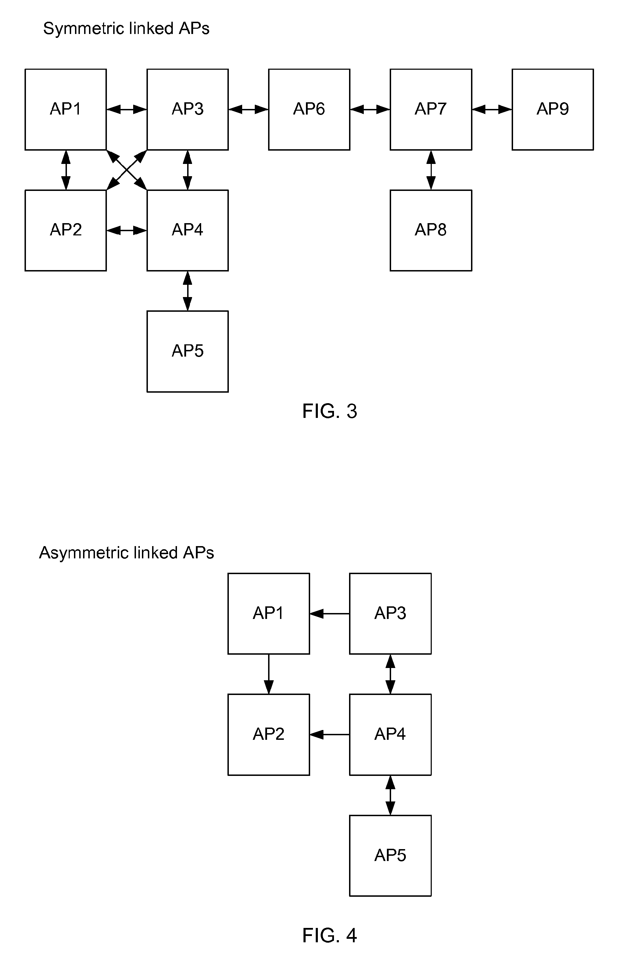

FIGS. 3 and 4 each show a set of linked access points 230, in accordance with some embodiments. In FIG. 3, a linked set, which may be defined as part of a database, is shown symmetric where each double arrow represents a bidirectional link. For example, the double arrow between AP1 and AP2 indicates AP1 has a link to AP2 and AP2 has a link to AP1. The links exemplified in FIG. 3 may be conveyed to a mobile device 100 as described above (e.g., in tabular form or by providing pairs of linked APs). However, APs that are all linked to one another may be indicated to a mobile device just by providing a list of the APs plus an indication that all of the APs in the list are linked to one another. For example, this may be done for APs 1, 2, 3 and 4 shown in FIG. 3, which are all linked to one another. Such a list of linked APs may be provided in the form of a group.

In a first embodiment, a group of APs that are all linked to one another may be indicated to a mobile device 100 with the AP identities that make up the group (e.g., AP1, AP2, AP3 and AP 4 in FIG. 3) being provided to a mobile device 100. In another second embodiment, data may be provided to a mobile device 100 for each AP that may include an indication of one or more groups to which each AP may belong. A mobile device 100 may be able to identify which APs belong to the same group using a common group identifier for the member APs. As an example of the first embodiment, a group with an ID G1 may be indicated by a location server 240 to a mobile device 100 with the location server conveying to the mobile device that the group G1 includes AP1, AP2, AP3 and AP4 in the example of FIG. 3. As an example of the second embodiment, a location server may provide data to mobile device 100 for each of AP1, AP2, AP3 and AP4 in the example of FIG. 3 and may indicate in the data for AP1 that AP1 belongs to group G1, in the data for AP2 that AP2 belongs to group G1, in the data for AP3 that AP3 belongs to group G1 and in the data for AP4 that AP4 belongs to group G1.

In FIG. 4, a linked set of APs, which may be defined within a database, is asymmetric. In this example, an AP A may have a link to an AP B if AP A is able to receive and decode signals from AP B. Thus, for example, the one-way arrow from AP1 to AP2 indicates that AP1 may usually detect AP2 but that AP2 does not usually detect AP1. This asymmetry may arise if AP2 has a larger coverage area than AP1 such that AP1 is within the coverage area of AP2 but AP2 is not in the coverage area of AP1. The double arrow between AP3 and AP4 for example indicates both APs can detect and decode signals from one another. Such symmetry may arise if, for example, both APs have a similar sized coverage area - or they just happen to be close together.

A mobile device 100 may make use of links between APs to determine which APs to measure in order to determine or help determine its location. For example, if mobile device 100 is located as shown in FIG. 2C within the indoor area 300, it may be able to receive signals from AP 230-1 and AP 230-2 prior to any location determination since these APs are nearby to mobile device 100 and thus may be detected as part of a normal attempt by mobile device 100 to obtain wireless coverage. If mobile device 100 needs to obtain its location (e.g., to assist an application on mobile device 100 that is providing location related information such as directions or a list of nearby facilities to the user of mobile device 100) or if location server 240 requests the location of mobile device 100 or measurements to help determine a location of mobile statin 100 from mobile device 100, it may be unclear to mobile device 100 (or to some positioning process or positioning engine on mobile device 100) whether to just measure the two detected APs 230-1 and 230-2 or to try to measure additional APs. Assuming links between APs corresponding to those exemplified in Table 2 have been provided in one form or another to mobile device 100 by location server 240, mobile device 100 can use the links to determine whether there are other APs that mobile device 100 may be able to detect and measure. In the example shown in Table 2, AP 230-1 is linked to APs 230-2 and 230-5 and AP 230-2 is linked to APs 230-1, 230-3, 230-5 and 230-7. Therefore, APs 230-1 and 230-2 are collectively linked to other APs 230-3, 230-5 and 230-7. Mobile device 100 may then make an attempt to detect and measure signals from each of these three APs. For example, mobile device 100 may scan for all APs and stop the scan when it has detected all three of APs 230-3, 230-5 and 230-7 or perhaps just one or two of them (e.g., in the case that a long scan only detects one or two of the APs). Alternatively, mobile device 100 may scan specifically for each of APs 230-3, 230-5 and 230-7 using information for these APs provided by location server 240 such as their supported radio technologies, frequency bands, channels, pilot channel scrambling codes etc.. In one embodiment, once mobile device 100 detects any one of the APs 230-3, 230-5 and 230-7, it may attempt to detect and measure other APs that are linked to these APs. For example, if mobile device 100 detects AP 230-3, it may attempt to detect APs 230-4 and 230-6 to which AP 230-3 has links in Table 2 and that were not previously among the APs that mobile device 100 was trying to detect.

In another embodiment, when a mobile device 100 may already have detected many nearby APs - for example all APs shown in FIG. 2C - mobile device 100 may use the links (e.g., those exemplified in Table 2) to determine which APs of the already detected APs should be measured to obtain RSSI, S/N, RTT or other measurements to help determine the location of mobile device 100. In order to do this, mobile device 100 may determine one or a few detected APs that provide the strongest signal strength at mobile device 100 and make measurements of these initial APs and in addition measure other detected APs to which these initial APs have links.

In another embodiment, a link from a first AP to a set of other APs may indicate a geometric advantage in measuring APs on this other set whenever the first AP is detected and/or measured. For example, the APs to which the first AP has links may be oriented in different directions relative to the first AP and not predominantly in just one direction. Therefore, a mobile device that receives a strong signal from the first AP and is therefore probably close to the first AP may be surrounded by the set of the other APs meaning that determination of the location of mobile device 100 from measurements by mobile device 100 of these other APs may have good geometric properties that will not degrade location accuracy.

Using the links between APs as a guide as to which APs a mobile device 100 should attempt to detect and measure may shorten the time needed to detect and measure a sufficient number of APs to enable an accurate location for mobile device 100. For example, mobile device may not need to spend extra time trying to detect and measure more distant APs like APs 230-10 and 230-11 in the example of FIG. 2C.

### Grouped APs

Another embodiment concerns grouping of APs. Access points that are generally visible or are generally useful at the same set of locations (e.g., within some small indoor area of perhaps 50 to 100 meters across in any direction) may be placed within the same group. In this embodiment, the relationships for APs comprise the groups or groups within which each AP is placed and minimally comprise one group of APs. The group of APs may be defined as part of a database (e.g., within a location server 240) and/or may be determined by a location server 240 as part of assistance data for APs conveyed to a mobile device 100 (e.g., by a positioning protocol such as LPPe). A group of APs in this embodiment may be similar to or the same as a group of APs with symmetric links between all APs as described for the linked APs embodiment or may be different. For example, a group of APs (e.g., that are part of a grouped database) may comprise a plurality of access points predicted to have signals receivable at generally the same locations. Groups may be provided to a mobile device 100 by a location server 240 for different areas of a building, structure or venue etc. Each group that is provided may be associated with a particular area of a building, structure or venue (e.g., a particular floor or part of a floor) and may comprise some or all access points within that particular area. For example, an area may comprise a floor or wing of a building, a particular set of rooms in a building, the coverage area of a wireless cell, the coverage area of a particular access point or set of access points or some other portion of an indoor area, building or structure. A mobile device 100 may make use of a group of APs in a similar way to usage of a linked set of APs as described earlier. Thus, if a mobile device 100 is able to detect one AP A that is a member of some group of APs G1, the mobile device 100 may attempt to detect and measure some or all of the other APs in the group G1. If the AP A that the mobile device 100 is initially able to detect is a member of more than group (e.g., groups G1 and G2) then mobile device 100 may attempt to detect and measure some or all APs from all groups to which AP A belongs (e.g., groups G1 and G2 in the above example).

Groupings of APs may also be used by a location server 240 to determine APs for which assistance data should be sent to a mobile device 100. For example, if a mobile device 100 reports a set of APs that it is currently able to detect, location server may provide assistance data only for other APs that are in the same group or groups as the detected APs in order to increase the probability that the mobile device 100 will be able to make use of the assistance data due to being more likely able to detect and measure the APs for which assistance data is provided. Such a policy at location server 240 may reduce the amount of assistance data that needs to be transferred to mobile device 100 as well as indicating to mobile device 100 the APs that mobile device 100 will most likely be able to detect and measure at its current location.

A location server 240 or mobile device 100 may also determine applicable groups of APs from rough location information. For example, if a single location point or a location area is determined for each group of APs (e.g., the centroid of the locations of the APs within a group in the case of a location point) or an area (e.g., a minimal area) encompassing all APs within a group - a mobile device 100 or a location server 240 may use an initial approximate location estimate for mobile device 100 (e.g., obtained from measurements of just one AP) to determine one or more groups of APs that mobile device 100 may attempt to detect and measure. This may be done by finding one or more groups whose location points or location areas are close to or encompass, respectively, the approximate location of mobile device 100.

A group of APs may be associated with a particular floor or wing of a building. For example, if a rough position of the mobile device 100 is on a second floor (e.g., as determined from the strongest access point 230 detected by mobile device 100 being on the second floor), a group of access points 230 for just that second floor may be provided to the mobile device 100 in an assistance data message. Access points from a common floor may be more likely to have signals that are received and provide a better position fix than access points from other floors (e.g., the vertically closest access points on different floors to a mobile device 100 may be less likely to be received and less useful in finding a position fix). In some cases, the assistance data message provided to the mobile device 100 may contain a group of access points 230 for the current rough position of the mobile device 100. In other cases, the assistance data message provided to the mobile device 100 may also contain information for neighboring groups (e.g., neighboring floors, wings or buildings).

A mobile device 100 may determine when to stop using one group of access points for location measurements and start using another group of access points based on recent relative movement. For example. consider the case when a mobile device 100 is able to detect and measure access points in a Group A associated with floor N in a building. The mobile device 100 then detects (e.g., using internal inertial or barometric sensors) that it has moved up by *n* floors. The mobile device 100 may then determine that it should look for and measure access points in a different group (say group B) that are associated with an area on floor *N*+*n* of the building. The internal sensors used may include a barometer indicating altitude change, an accelerometer used in dead reckoning, or a signal strength (e.g., RSSI) or signal travel time (e.g., OWT or RTT) that indicates all access points 230 in a current group are becoming too distant. In some cases, a mobile device 100 may determine that it has moved some horizontal distance and/or vertical distance from some previous location where the mobile device 100 was using some group of access points for location related measurements, but may not be able to determine the exact distance (e.g., may not know the exact number of floors by which altitude may have changed and/or an accurate value for change in horizontal location). In such a case, a mobile device may assume that a previously used group of APs may no longer be valid and may either request that assistance data for a new group be sent by a location server 240 or may verify if mobile device 100 may already have data related to another more suitable group of APs. Mobile device 100 or location server 240 may determine a suitable new group of APs using an approximate location estimate for mobile device 100 - e.g., by determining whether there is a group of APs encompassing or nearby to this location. Alternatively, mobile device 100 or location server 240 may take one or a few APs that can currently be detected by mobile device 100 with good RSSI and/or S/N measurements and use whichever group (or groups) of APs contains (or contain) the detected AP in the case of one AP or some or all of the detected APs in the case several APs were detected.

When a location server 240 determines that a mobile device 100 has moved to a different area, location server 240 may send an updated assistance data message containing a new group of access points 230 (e.g., determined as described above). If various groups of access points 230 have already been downloaded to the mobile device 100 by location server 240, location server 240 may only send an indicator of a group of access points 230 to mobile device 100. Alternatively, when mobile device 100 determines that it has moved to a new area or otherwise determines that a current group of APs can no longer be used for location measurements (e.g., because some or all of the APs in the group can no longer be detected or accurately measured), the mobile device 100 may send a new request for assistance data to location server 240. For example, the location server 240 may initially send assistance data to the mobile device 100 where the assistance data contains data for access points 230 in a Group A that are nearby to a current location for a mobile device 100. The mobile device 100 may then move to another floor or different area in a building or venue. The server may then send assistance data containing data for access points in a different group B to the mobile device 100. The group B may be determined by location server 240 from one or more of: (1) an approximate location for the mobile device 100 after it has moved; (2) one or more APs that the mobile device 100 is able to detect and possibly measure after it has moved; (3) a relative change in the location of mobile device 100 (e.g., the approximate number of floors by which the mobile device 100 may have moved up or down or the approximate distance and direction for any horizontal movement); and (4) one or more macro cells (e.g., for GSM, WCDMA, LTE, or cdma2000) that the mobile device 100 can detect after it has moved. Alternatively, the location server 240 may send assistance data for neighboring groups of access points 230 to mobile device 100 in anticipation that mobile device 100 may move from a location where one group is used to a different location where another group needs to be used. In this case, mobile device 199 may determine the new group (e.g., using one or more of alternatives (1), (2), (3) and (4) above) or location server 240 may determine the new group and indicate the group to mobile device 100 (e.g., using the LPPe positioning protocol).

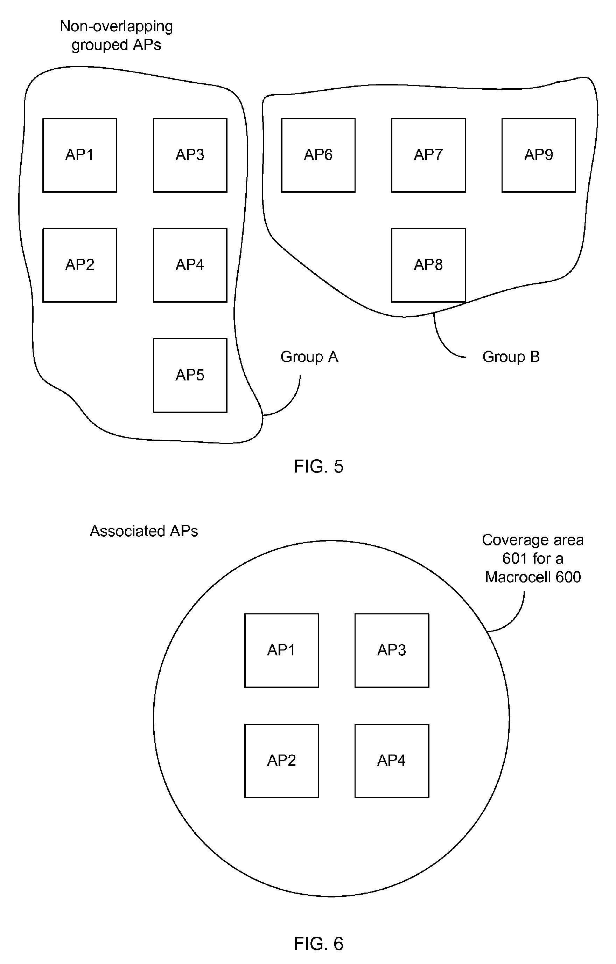

FIG. 5 shows two groups of access points, in accordance with some embodiments. Each group of APs may be included or indicated in assistance data sent to a mobile device 100 by a location server 240. Each group of APs may also be defined within a database within location server 230 and/or mobile device 100. For example, the location server 240 may contain a database showing AP1-AP5 in Group A and AP6-AP9 in group B. In this example, the database has Groups A and B as non-overlapping groups. Groups of APs and/or a grouped database may be overlapping or non-overlapping. In non-overlapping groups or a non-overlapping grouped database, an access point 230 is exclusively in only one group. In overlapping groups and/or an overlapping grouped database (not shown), an access point may belong to one, two or more groups. For example, a grouped database may include overlapping groups, wherein an access point is found in at least two groups.

In another embodiment, a group of APs may be determined by a location server 240 due to good geometric properties. For example, the APs may be dispersed throughout a particular area and not mostly or entirely concentrated within just a part of the area. This may improve geometric diversity and therefore location accuracy for measurements made by a mobile device 100 of APs within the group. In a further embodiment, a group of APs in a building may be mostly confined to a common floor level but contain a few APs on adjacent floors to help confirm (from measurements made by a mobile device 100) whether the mobile device 100 is on the same floor level as most APs in the group or is on a different floor level (e.g., an adjacent floor).

### Associated APs

In the third embodiment, access points may be associated with macrocells using an associated database or a macrocell-to-access point association. In this embodiment, the relationships for APs comprise the macrocell or macrocells with which each AP is associated and minimally comprise the association of one AP to one macrocell. In this embodiment, a macrocell, such as a mobile radio cell from a GSM, CDMA, LTE, cdma2000 or the like, is associated with one or more access points that are visible from one or more positions within the coverage area of that macrocell. In some embodiments, only access points visible from indoor locations and that are also within coverage of a particular macrocell may be associated with the macrocell (e.g., populated in an associated database for the macrocell).

When a mobile device 100 is able to detect signals (e.g., from a base device such as base device 220 in FIG. 1) for some macrocell, APs that are associated with that macrocell may be used by mobile device 100 for location measurements to help determine the location of mobile device 100. If mobile device 100 indicates the detected macrocell to location server 240, location server 240 may send assistance data for the APs associated with the macrocell to mobile device 100. Alternatively, location server 240 may provide assistance data for many APs in the vicinity of the current location of mobile device 100 to mobile device 100 together with the macrocell or macrocells with which each AP is associated. Mobile device 100 may then determine from this received assistance data which APs are associated with a detected macrocell and therefore which APs should be used for any location determination. In some embodiments, mobile device 100 or location server 240 may only use a detected macrocell to determine associated APs when mobile device 100 is able to receive signals from the associated base station with some minimum signal level (e.g., some minimum RSSI and/or minimum S/N). In some embodiments, when mobile device 100 is able to detect more than one macrocell, mobile device 100 may use APs, or location server 240 may provide assistance data for APs or indicate APs, associated with all the detected macrocells. For example, the associated APs may be the union of all APs associated with any one of the defected macrocells. Alternatively, the associated APs may be restricted to APs that are each associated with every detected macrocell.

FIG. 6 shows a geographic coverage area 601 for an example macrocell 600 and fours APs (AP1, AP2, AP3, AP4) that are within the coverage area 601, in accordance with some embodiments. Typically, therefore, each of APs 1 to 4 will be detected by a mobile device 100 at one or more points within the coverage area 601. Therefore each of the APs 1 to 4 may be associated with the macrocell 600. As an example, a location server 240 or mobile device 100 may have a database indicating that APs 1 to 4 are associated with macrocell 600. Alternatively or in addition, location server 240 may transfer the association of APs 1 to 4 with macrocell 600 to a mobile device 100.

In an associated database (e.g., in a location server 240), a macrocell may be used to indicate a set of access points 230. The access points 230 may be overlapping (such that two macrocells may indicate a common access point 230) or non-overlapping (such that each access point 230 is associated with only one macrocell). With an associated database, a mobile device 100 may provide an identity of a detected macrocell to a location server 240. In response, the location server 240 may provide assistance for one or more access points 230 (e.g., AP1-AP4 in the example of FIG. 6) associated with the macrocell to the mobile device 100.

### AP Feedback

In the fourth embodiment, a mobile device may provide feedback on which APs were or were not detected to a location server 240. In response to assistance data from a location server 240, a mobile device 100 may indicate to the location server 240: (1) APs that are detected by the mobile device 100 but that were not indicated by the location server 240; and/or (2) APs that the mobile device 100 failed to detect (e.g., after attempting to detect these APs) but that were indicated by the location server 240. Such feedback from many mobile devices 100 may be used by a location server 240 to determine errors or changes to the data that the location server 240 may have regarding APs that may be used for location determination at different locations. For example, if a location server 240 maintains data (e.g., a database) for linked APs, grouped APs or associated APs (as described herein previously), the location server 240 may use the feedback information to correct or otherwise update this data.

The feedback information sent by a mobile device 100 to a location server 240 may include a list of one or more access points 230 contained in assistance data sent by location server 240 to mobile device 100 that were not seen by the mobile device 100 (after attempting to find those listed access points 230). The location server 240 may use this feedback information to remove access points 230 from a set of linked APs (e.g., a linked database of APs), a group of APs (e.g., in grouped database) or associated APs (e.g., an associated database). For example, if a threshold number of mobile devices 100 tell a location server 240 that a particular access point 230 is not visible even though it is listed in the assistance data, then that particular access point 230 may be removed (e.g., a link to the AP may be removed, the AP may be removed from a group, or the AP may be unassociated from a macrocell).

More specifically, when linked APs are used, a mobile device 100 may attempt to detect and measure a particular AP A to which one or more APs that the mobile device is able to detect have links. If the mobile device 100 fails to detect the AP A and reports this to location server 240, location server 240 may remove the link to the AP A from the other APs if other mobile devices provide the same feedback. When grouped APs are used, and a mobile device 100 is able to detect some APs in the group but not one or more others, feedback of this information may cause a location server to remove the non-detected APs from the group if other mobile devices provide the same feedback. When associated APs are used and a mobile device is unable to detect one or more APs associated with some detected macrocell and reports this to a location server 240, the location server may disassociate the non-detected AP(s) from the macrocell if other mobile devices 100 provide the same feedback. This feedback mechanism may be used to make corrections and updates (e.g., after an AP is moved to a new location) or if initial data in a location server 240 was incorrect.

On the other hand, the feedback information may include a list of one or more access points 230 not contained in assistance data but seen by the mobile device 100. The server may use this feedback information to add an access point to a linked database, a grouped database or an associated database. For example, if a threshold number of mobile devices 100 tell a location server 240 that a particular access point 230 is visible but not listed in the assistance data, then that particular access point 230 may be added (e.g., a link may be added, the AP may be added to a group, or the AP may be associated with a particular macrocell). The location server may then use measurements reported by mobile devices 100 to locate the new access point and include the determined AP location as part of the data for the AP in any location server database. In some cases, the location server may already have data for the AP and may need to correct this data (e.g., if the AP was previously associated with a different location and a different AP group).

More specifically, when linked APs are used, a mobile device 100 may detect a particular AP B to which other APs that the mobile device 100 is able to detect do not have links. If the mobile device 100 reports this to location server 240, location server 240 may add a link to the AP B from the other APs detected by mobile device 100 if other mobile devices provide the same feedback. In addition, location server 240 may add links from the AP B to each of the APs detected by mobile devices 100 when AP B is detected. In some embodiments, links may only be added when the signal strengths measured by mobile devices that detect AP B and other APs are above some threshold. When grouped APs are used, and a mobile device 100 is able to detect an AP B that is not in a group of APs that the mobile device is using for location measurements and provides feedback on this to a location server 240, the location server 240 may add the AP B to the group of APs if other mobile devices provide the same feedback. As before, in some embodiments, the addition may only occur when measured signal strength values for the AP B and other APs in the group are above some threshold value. When associated APs are used and a mobile device is able to detect an AP that is not associated with some detected macrocell and reports this to a location server 240, the location server may associate the detected AP B with the macrocell if other mobile devices 100 provide the same feedback (e.g., if the signal strength measured for the AP B is above some minimum threshold for at least some of the mobile devices 100 providing the feedback). This feedback mechanism may be used to make corrections and updates (e.g., after an AP is moved to a new location) or if initial data in a location server 240 was incorrect.

As such, one or more mobile devices 100 may be used to make a database residing on a location server 240 more accurate for future requests for assistance data from various mobile devices 100. A mobile device 100 may report undetectable and/or missing access point either automatically along with other location information reported to a location server (such as location measurements or a location estimate) or when polled by a server. In addition, the mobile device 100 may include an indication of its current position, identities of APs that can be detected, macrocells that can be detected and signal measurements for detected APs and/or macrocells.

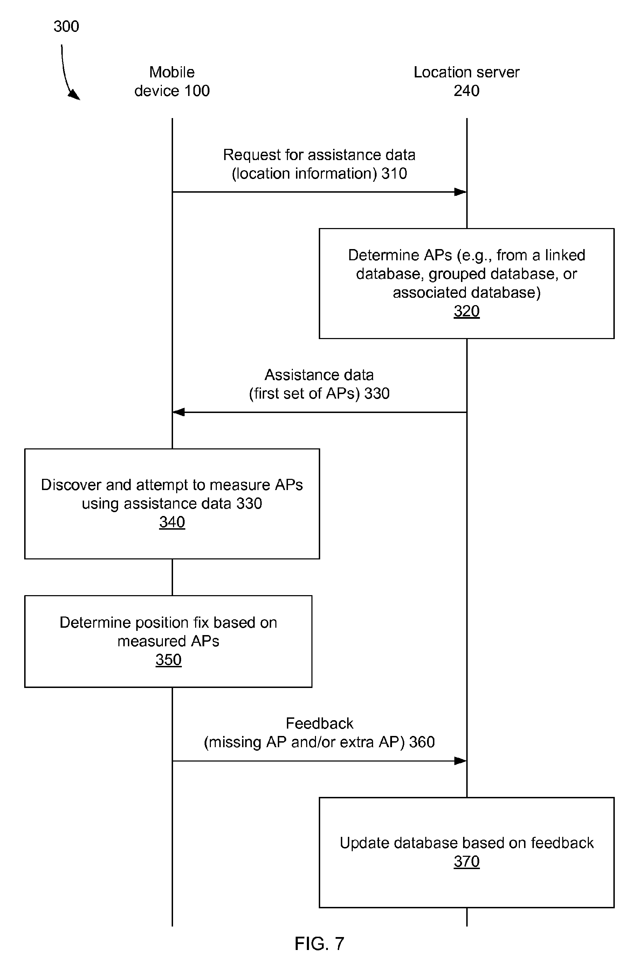

FIG. 7 shows a method 300 of messaging between a mobile device 100 and a location server 240, in accordance with some embodiments. To receive assistance data related to APs, a mobile device 100 sends a location server 240 a request 310 for assistance data. The request 310 may include information related to the current location of mobile device 100 that may comprise one or more of: (1) an approximate location estimate for mobile device 100; (2) measurements of base stations, APs and/or GNSS satellites that location server 240 may use to determine an approximate location estimate for mobile device 100; (3) the identities or addresses (e.g., MAC address or cell identity) for one or more APs that mobile device 100 is able to detect; and (4) the identities (e.g., cell identity or cell global identity) for one or more macrocells that mobile device 100 is able to detect. The request 310 is optional and in some embodiments may not be sent.

At 320, the location server 240 may determine a first set of APs that may be nearby to mobile device 100 that mobile device 100 may be able to detect and measure to help determine its location at the current time and/or in the future. The location server may determine the first set of APs using any or all or the location information provided in the request 310 (if the request 310 is sent) as well as any relationships for the APs known to location server 240 (e.g., links between APs, groups of APs or APs associated with macrocells). For example, the location server 240 may use the approximate location of mobile device 100 (e.g., as provided in the request 310) to determine a first set of APs that comprise a group of APs defined in a grouped database (e.g., a group of APs nearby to the approximate location of mobile device 100). Alternatively or in addition, location server 240 may use a linked database to determine a first set of APs to which APs indicated as detected by mobile device 100 in request 310 have links. Alternatively or in addition, location server 240 may use a macrocell reported by mobile device 100 as detected in request 310 to determine a first set of APs that are associated with this macrocell in an associated database. Alternatively, location server 240 may determine a first set of APs that are in the general vicinity of mobile device 100 (e.g., in the same building as mobile device 100 if this can be determined from the location information in request 310 or is already known from some previous interaction with mobile device 100).

The location server 240 sends the mobile device 100 the first set of APs as assistance data 330 and may include additional information for the first set of APs such as location coordinates for an AP, supported radio technologies for an AP, supported frequencies for an AP, supported channels for an AP, an address for an AP, a link from one AP to another AP, a group of APs and an association of an AP to a macrocell. The assistance data 330 may further comprise relationships for the first set of APs, such as: (1) an indication of links between the APs as described for the linked APs embodiment; (2) an indication of groups of APs as described for the grouped APs embodiment; and/or (3) an indication of an association of APs with macrocells as described for the associated APs embodiment.

At 340, the mobile device 100 may search for and discover access points 230 in the first set of APs received in the assistance data 330 and may make location measurements for the discovered APs such as measurement of RSSI, S/N and/or RTT. In an embodiment, the mobile device 100 may determine a second set of APs that may be a subset of the first set of APs using the relationships provided in assistance data 330 for the first set of APs and location information obtained by mobile device 100. The location information may comprise one or more of an approximate location estimate for mobile device 100, one or more APs that can be detected by mobile device 100 and one or more macrocells that can be detected by mobile device 100. Mobile device 100 may use this location information to determine APs for the second set that are included in the first set and that are additionally: (1) linked to APs detected by mobile device 100; (2) in the same group or groups as APs detected by mobile device 100; (3) in one or more groups of APs whose general locations are nearby to the approximate location of mobile device 100; and/or (4) associated with a macrocell detected by mobile device 100. Mobile device may then make location related measurements for this second set of APs (e.g., measurements of RSSI, S/N and/or RTT) which may reduce delay and increase location accuracy in comparison to attempting to measure all APs provided in the first set of APs. In an embodiment, the second set of APs may include one more APs not in the first set of APs and mobile device 100 may then request assistance data for these APs from location server 240 prior to or after making measurements of these APs (not shown in FIG. 7).

At 350, based on the measurements in 340, the mobile device 100 (mobile-based location determination) or both the mobile device 100 and location server (mobile-assisted location determination) may determine a position fix for the mobile device 100. For the mobile based location case, the mobile device 100 may use the measurements in 340 and assistance data 330 to determine its location (e.g., may use location coordinates for the APs provided in assistance data 330), For the mobile assisted case, mobile device 100 may return the measurements in 340 to location server 240 for location server 240 to perform the location determination after which location server 240 may return the calculated location to mobile device 100 (not shown in FIG. 7).

Some access points 230 in the set of access points that mobile device 100 attempts to measure in 340 (either the first set of access point from 330 or the second set of access points determined from the first set by mobile device 100) may not be discoverable. Some access points 230 that are discovered by mobile device 100 may not be in the set of access points that mobile device 100 attempts to measure in 340. In some embodiments, the mobile device 100 sends the location server 240 feedback 360 containing differences to the first or second set of APs. For example, the mobile device 100 may send the location server a list of access points missing from the first or second set that should have been in the first or second set and/or extra access points in the first or second set that should not have been in the first or second set. At 370, the location server 240 may update the database by adding or removing links in the case of a linked database, adding or removing APs to or from groups of APs (or creating or deleting whole groups) in the case of a grouped database and associating or disassociating APs with macrocells in the case of an associated database.

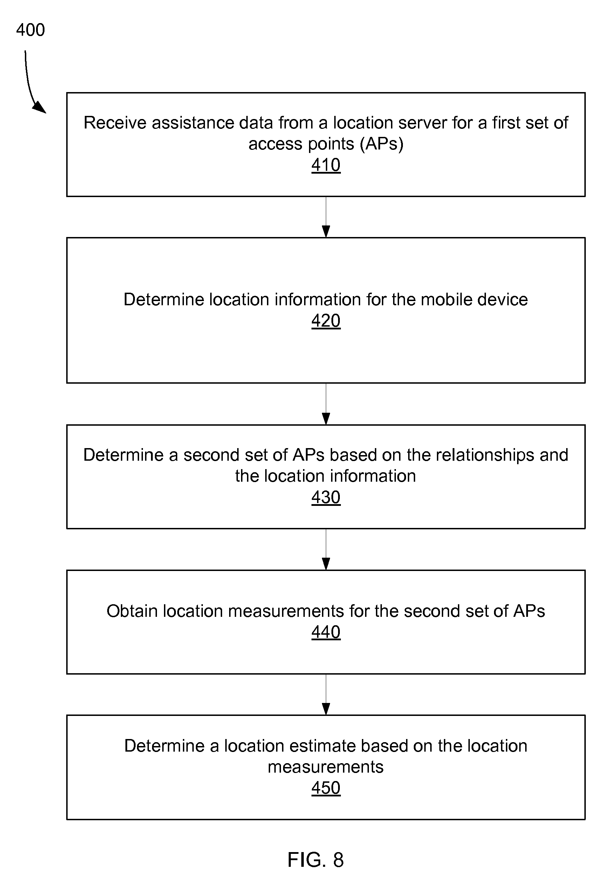

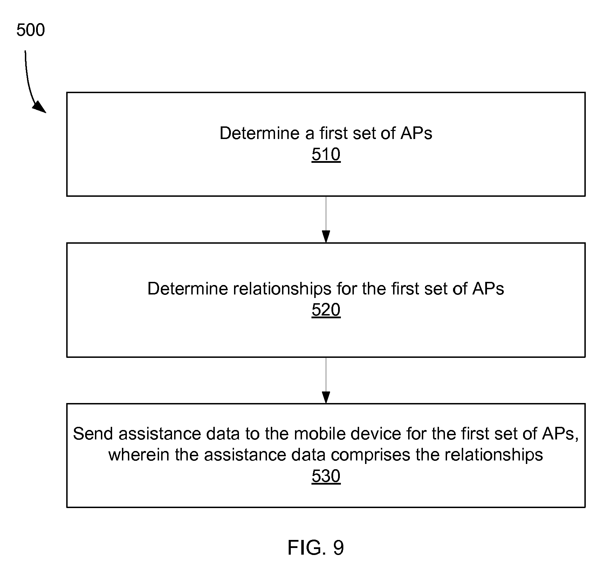

FIGS. 8 and 9 show methods 400 and 500, in accordance with some embodiments. In FIG. 8, a method 400 is shown for a mobile device (e.g., mobile device 100) to determine a position fix in a wireless network.

At 410, the mobile device receives assistance data from a location server for a first set of access points (APs). The first set of APs may comprise APs nearby to the mobile device (e.g., in the same building as the mobile device) and/or APs with strong signal strength at the location of the mobile device. In some embodiments, the first set of AP comprises a single AP (e.g., the serving AP for the mobile device). The assistance data comprises relationships for the first set of APs - for example, the linkage relationships shown in Table 2. The relationships may comprise at least one of: (1) a link from one AP to another AP; (2) a group of APs; or (3) an association of an AP to a macrocell. The assistance data may comprise at least one of: (1) location coordinates for an AP; (2) supported radio technologies for an AP; (3) supported frequencies for an AP; (4) supported channels for an AP; (5) an address for an AP; (6) a link from one AP to another AP; (7) a group of APs; or (8) an association of an AP to a macrocell. In some embodiments, at least one AP in the first set of APs supports wireless communication using at least one of GSM, W-CDMA, LTE, cdma2000, WiFi and Bluetooth

At 420, the mobile device determines location information for the mobile device. The location information may comprise at least one of: (1) an approximate location estimate for the mobile device; (2) an AP detected by the mobile device; or (3) a macrocell detected by the mobile device. Determining the location estimate may comprise obtaining and sending location measurements to the location server and receiving the location estimate from the location server.

At 430, the mobile device determines a second set of APs based on the relationships and the location information. The first set of APs may be in one or more rows listed in the left column of Table 2. The second set of APs may be in the right column of Table 2 in rows corresponding to the first set of APs. In another embodiment, the second set of APs may be in the same group or groups as some of the first set of APs. In a further embodiment, the second set of APs may be associated with a macrocell detected by the mobile device. The mobile device may use the location information to determine how to apply the relationships. For example, if the location information includes a detected AP and the detected AP is present in the first set of APs, the mobile device may use links provided for the detected AP or a group or groups containing the detected AP to discover other APs in the second set that may be linked to the detected AP or in the same group or groups as the detected AP. If the location information includes a macrocell, the mobile device may discover APs in the second set that are also in the first set and that are associated with the detected macrocell. If the location information includes a location estimate for the mobile device, the mobile device may discover one or more APs in the first set of APs with location coordinates near to the location estimate and may then use any links provided by the location server for these APs and/or any group or groups provided by the location server that contain these APs to discover other APs. In general, the mobile device may use the location information to select only some of the APs in the first set of APs for the second set of APs and then use the relationships to discover other APs for the second set of APs. The other APs that are discovered for the second set may also be part of the first set of APs and may be more likely to have signals that can be detected and measured by the mobile device than other APs in the first set that are not part of the second set of APs. The second set of APs may thus be a subset of the first set of APs and may enable faster detection by the mobile device and more accurate location measurements than other APs in the first set of APs. In an embodiment, the second set of APs may include at least one AP not in the first set of APs (e.g., an AP linked to an AP in the first set or in the same group as an AP in the first set of APs for which additional data is not provided by the location server).

At 440, the mobile device obtains location measurements for the second set of APs. In some embodiments, the mobile device obtains location measurements for the first and second sets of APs but excludes APs not in the first and second sets of APs. In other embodiments, the mobile device obtains location measurements for the second set of APs but excludes APs not in the second set of APs.

At 450, the mobile device determines a location estimate based on the location measurements. The mobile device may determine the location estimate itself or may send the location measurements to the location server after which the location server determines the location estimate and sends the location estimate to the mobile device. Method 400 may also comprise the mobile device detecting an AP not in the second set of APs and sending the identity of the detected AP to the location server. Method 400 may also comprise the mobile device failing to detect an AP in the second set of APs and sending the identity of the not detected AP to the location server. Method 400 may also comprise the mobile device sending a request for assistance data to the location server for the at least one AP not in the second set of APs and receiving assistance data from the location server for the at least one AP.

In FIG. 9, a method 500 in a location server (e.g., location server 240) provides assistance data for access points (APs) to a mobile device (e.g., mobile device 100). At 510, the location server determines a first set of APs. The first set of APs may include APs nearby to the mobile device (e.g., APs in the same building or in the same venue as the mobile device). At 520, the location server determines relationships for the first set of APs. The relationships may comprise at least one of: (1) a link from one AP to another AP; (2) a group of APs; or (3) an association of an AP to a macrocell. The relationships may be stored in a database in the location server.

At 530, the location server sends assistance data to the mobile device for the first set of APs, wherein the assistance data comprises the relationships. The assistance data may comprises at least one of: (1) location coordinates for an AP; (2) supported radio technologies for an AP; (3) supported frequencies for an AP or the supported channels for an AP; (4) an address for an AP; (5) a link from one AP to another AP; (6) a group of APs; or (7) an association of an AP to a macrocell.

The method 500 may also comprise the location server receiving location information from the mobile device and determining the first set of APs based on the location information. The location information may comprise at least one of an approximate location estimate for the mobile device, location measurements obtained by the mobile device, the identity of an AP (e.g., an AP detected by the mobile device) and the identity of a macrocell (e.g., a macrocell detected by the mobile device). The method 500 may also comprise the location server receiving the identity of at least one of a detected AP and a non-detected AP from the mobile device and updating the database based on the identity. In some embodiments, at least one AP in the first set of APs supports wireless communication using at least one of GSM, W-CDMA, LTE, cdma2000, WiFi or Bluetooth.

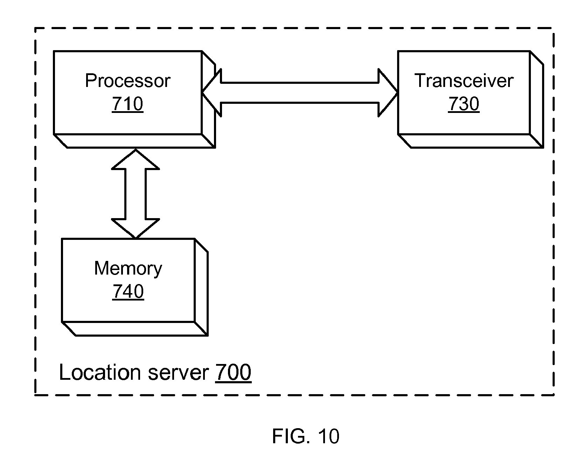

FIG. 10 shows a location server 700 for determining a position fix of a mobile device 100 in a wireless network, in accordance with some embodiments. The location server may correspond to location server 240 and includes a processor 710, a transceiver 730 and a memory 740. The transceiver 730 is configured to receive, from a mobile device 100, a request for assistance data, location information for the mobile device 100 (e.g., a location estimate or the identities of detected APs and/or macrocells) and feedback on detected and not detected APs. The transceiver 730 is also configured to send, to the mobile device, assistance data containing information for APs (e.g., identities of APs, coordinates of APs). The information for APs may include relationships for APs such as links between APs, groups of APs and AP association with macrocells. The memory 740 is coupled to the processor 710 and may store instructions to enable processor 710 to support the various embodiments described herein. The processor 710 is coupled to the transceiver 730 and configured to send assistance data to a mobile device 100 and receive a request for assistance data from mobile device 100 according to embodiments described herein. Location server 700 may correspond to a SUPL SLP, an E-SMLC, an SAS or some other type of location server.

### Rough Position

Assistance data sent from a location server 240 to a mobile device 100 may be based on a rough position of the mobile device 100. Rough position may be determined from triangulation or trilateration from signal strength measurements of signals from certain access points 230 and/or timing (e.g., OWT or RTT) between the mobile device 100 and access points 230. Rough position may correspond to the coverage area of a macrocell or of an access point. A strongest received access point may be used to indicate a group of access points or may be used to find access points linked to the strongest received access point. Instead of receiving a large list of access points from a server and searching the list, the mobile device 100 may target a shorter list of access points 230 that are associated with the rough position of the mobile device 100, thereby saving mobile device 100 battery usage and improving a time to fix.

Rough position may be indicated by one or more received signal strength indicators. Rough position may be indicated by a time-difference of arrival (TDOA) of signals from two or more synchronized base devices (such as with LTE base devices) at the mobile device 100. Rough position may be associated with a particular macrocell.

Not only may the rough position of a mobile device 100 be indicated by signals from access points 230 and base stations, a rough position may be determined from a short range signal (such as a Bluetooth signal) or an extremely long range signal (such as a GNSS signal). For example, reception of a Bluetooth signal at a mobile device 100 may be correlated to a group of access points usually visible when the Bluetooth signal is visible. Rough position may be indicated by measurements of GNSS satellites. Rough position may have been highly accurate when initially obtained but less accurate after some time has elapsed. Rough position may be associated with an initial highly accurate fix that is subsequently updated using sensors on a mobile device 100 to produce a less accurate location fix after some time interval has elapsed due to the accumulation of small errors in sensor measurements.

A rough position may be determined by a mobile device. For example, a GNSS receiver, signals from a sensor or a wireless transceiver may determine a rough position. A rough position may be determined by a wireless network (e.g., a location server 240 in or associated with the wireless network). For example, rough position may be determined by a wireless network based on a particular base station and macrocell that are currently providing service to a mobile device 100.

### Geometric Related Information

A location server 240 may provide assistance data to a mobile device 100 that indicates geometric properties of APs that may be received by the mobile device 100. The geometric properties may relate to the general direction as seen from mobile device 100 from which signals from an AP may be received. Mobile device 100 may then use the provided geometric properties to measure signals from APs in different directions as seen from mobile device 100 and thereby avoid magnifying location errors due to poor geometry. With the grouped APs embodiment described earlier herein, geometric properties may be indicated via a 2 tier hierarchical grouping of APs. APs very close to one another may be grouped at a first tier 1. APs further apart from one another may be grouped at a second tier 2. For example, a tier 2 group may comprise a number of smaller trier 1 groups that may each comprise a number of APs that are close to one another. A mobile device 100 that detects a strong signal from an AP in a particular tier 1 group may then expect to receive strong signals from other APs in the same tier 1 group but can also attempt to measure signals from some APs in other tier 1 groups that are members of the same tier 2 group. The APs in the other tier 1 groups may be further away from the mobile device 100 but may also lie in different directions as seen by mobile device 100 and may thus provide good geometry. With the linked APs embodiment described earlier herein, APs may be linked to nearby APs using links that are indicated to be tier 1 links and may be linked to other more distant APs using links that are indicated to be tier 2 links. A mobile device 100 that detects a strong signal from one or more APs may then determine whether to measure other nearby APs linked to these detected APs by tier 1 links and/or to measure a few more distant APs linked to the detected APs by tier 2 links.

In the above embodiments and examples, an access point may be a WiFi AP, a Bluetooth AP, a Femtocell or some other wireless transceiver whose coverage area is small (e.g., up to 50 to 200 meters in any direction from the transceiver). The embodiments and examples may also apply to transceivers with a greater coverage area (e.g., a kilometer or more) that are located indoors or outdoors.

The previous embodiments and examples assume in some cases that a mobile device 100 receives positioning related assistance data from a location server 240. The positioning related assistance data may comprise one or more of linked APs, grouped APs and associated APs. In an embodiment, a mobile device 100 may receive assistance data comprising one or more of linked APs, grouped APs and associated APs from an AP (e.g., a base station, Femtocell or WiFi access point) via either broadcast from the AP or by point to point message transfer to mobile device 100 from the AP. Further, mobile station 100 may provide AP feedback to an AP (e.g., indicating APs that were detected but not indicated in provided assistance data and/or indicating APs that were not detected but that were indicated in provided assistance data). In other embodiments, a mobile station may receive assistance data related to APs from, and provide AP feedback to, other entities such as a Mobility Management Entity (MME) for LTE or a database server or some other network entity.

The methodologies described herein may be implemented by various means depending upon the application. For example, these methodologies may be implemented in hardware, firmware, software, or any combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine-readable medium tangibly embodying instructions may be used in implementing the methodologies described herein. For example, software codes may be stored in a memory and executed by a processor unit. Memory may be implemented within the processor unit or external to the processor unit. As used herein the term "memory" refers to any type of long term, short term, volatile, nonvolatile, or other memory and is not to be limited to any particular type of memory or number of memories, or type of media upon which memory is stored.

If implemented in firmware and/or software, the functions may be stored as one or more instructions or code on a computer-readable medium. Examples include computer-readable media encoded with a data structure and computer-readable media encoded with a computer program. Computer-readable media includes physical computer storage media. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

In addition to storage on computer readable medium, instructions and/or data may be provided as signals on transmission media included in a communication apparatus. For example, a communication apparatus may include a transceiver having signals indicative of instructions and data. The instructions and data are configured to cause one or more processors to implement the functions outlined in the claims. That is, the communication apparatus includes transmission media with signals indicative of information to perform disclosed functions. At a first time, the transmission media included in the communication apparatus may include a first portion of the information to perform the disclosed functions, while at a second time the transmission media included in the communication apparatus may include a second portion of the information to perform the disclosed functions.

The previous description of the disclosed aspects is provided to enable any person skilled in the art to make or use the present disclosure. Various modifications to these aspects will be readily apparent to those skilled in the art, and the generic principles defined herein may be applied to other aspects without departing from the scope of the disclosure.

## Claims

1. A method in a mobile device (100) for determining a position fix from a wireless network, the method comprising:
receiving (410) assistance data from a location server (240) for a first set of access points (230), APs, wherein the assistance data comprises relationships for the APs, wherein the relationships comprise:
a link from one AP to another AP,
an association of an AP to a macrocell, or
a combination thereof;
determining (420) location information for the mobile device;
determining (430) a second set of APs based on the relationships and the location information;
obtaining (440) location measurements for the second set of APs; and
determining (450) a location estimate based on the location measurements.

2. The method of claim 1, wherein the location information comprises:
an approximate location estimate,
a detected AP,
a detected macrocell, or
a combination thereof.

3. The method of claim 1, wherein determining the location estimate comprises:
sending the location measurements to the location server; and
receiving the location estimate from the location server.

4. The method of claim 1, further comprising:
detecting an AP not in the second set of APs; and
sending an identity of the detected AP to the location server.

5. The method of claim 1, further comprising:
failing to detect an AP in the second set of APs; and
sending an identity of the not detected AP to the location server.

6. The method of claim 1, wherein the second set of APs is a subset of the first set of APs.

7. The method of claim 1, wherein the second set of APs includes at least one AP not in the first set of APs; and preferably
further comprising:
sending a request for assistance data to the location server for the at least one AP not in the second set of APs; and
receiving assistance data from the location server for the at least one AP.

8. The method of claim 1, wherein the relationships further comprise a group of APs.

9. A mobile device (100) for determining a position fix in a wireless network, the mobile device comprising:
means for receiving assistance data from a location server for a first set of access points (230), APs, wherein the assistance data comprises relationships for the APs, wherein the relationships comprise:
a link from one AP to another AP,
an association of an AP to a macrocell, or
a combination thereof;
means for determining location information for the mobile device;
means for determining a second set of APs based on the relationships and the location information;
means for obtaining location measurements for the second set of APs; and
means for determining a location estimate based on the location measurements.

10. A method in a location server (240) for providing assistance data for access points (230), APs, to a mobile device (100), the method comprising:
determining (510) a first set of APs;
determining (520) relationships for the first set of APs, wherein the relationships comprise:
a link from one AP to another AP,
an association of an AP to a macrocell, or
a combination thereof; and
sending (530) assistance data to the mobile device for the first set of APs, wherein the assistance data comprises the relationships.

11. The method of claim 10, further comprising:
receiving location information from the mobile device; and
determining the first set of APs based on the location information.

12. The method of claim 11, wherein the location information comprises:
an approximate location estimate,
location measurements,
an identity of an AP,
an identity of a macrocell, or
a combination thereof.

13. The method of claim 10, wherein the relationships are stored in a database in the location server; and preferably
further comprising:
receiving an identity of:
a detected AP,
a non-detected AP from the mobile device, or
a combination thereof; and
updating the database based on the identity.

14. The method of claim 1 or 10, wherein the assistance data further comprises:
location coordinates for an AP,
supported radio technologies for an AP,
supported frequencies for an AP,
supported channels for an AP,
an address for an AP,
a link from one AP to another AP,
a group of APs,
an association of an AP to a macrocell, or
a combination thereof; and/or
wherein at least one AP in the first set of APs supports wireless communication using:
GSM,
W-CDMA,
LTE,
cdma2000,
WiFi,
Bluetooth, or
a combination thereof.

15. A location server (240) for providing assistance data for access points (230), APs, to a mobile device (100), the location server comprising:
means for determining a first set of APs;
means for determining relationships for the first set of APs, wherein the relationships comprise:
a link from one AP to another AP,
an association of an AP to a macrocell, or
a combination thereof; and
means for sending assistance data to the mobile device for the first set of APs, wherein the assistance data comprises the relationships.

## Patentansprüche

1. Ein Verfahren in einer Mobileinrichtung (100) zum Bestimmen einer Positionsbestimmung bzw. einer Positionsfestlegung aus einem Drahtlosnetzwerk, wobei das Verfahren Folgendes aufweist:
Empfangen (410) von Assistenz- bzw. Hilfsdaten von einem Standortserver (240) für einen ersten Satz von Zugriffspunkten bzw. APs (AP = access point) (230), wobei die Assistenzdaten Beziehungen für die APs aufweisen, wobei die Beziehungen Folgendes aufweisen:
eine Verbindung von einem AP zu einem anderen AP;
eine Assoziation eines AP zu einer Makrozelle, oder
eine Kombination davon;
Bestimmen (420) von Standortinformation für die Mobileinrichtung;
Bestimmen (430) eines zweiten Satzes von APs basierend auf den Beziehungen und der Standortinformation;
Erlangen (440) von Standortmessungen für den zweiten Satz von APs; und
Bestimmen (450) einer Standortschätzung basierend auf den Standortmessungen.

2. Verfahren nach Anspruch 1, wobei die Standortinformation Folgendes aufweist:
eine ungefähre Standortschätzung
einen detektierten AP,
eine detektierte Makrozelle, oder
eine Kombination davon.

3. Verfahren nach Anspruch 1, wobei das Bestimmen der Standortschätzung Folgendes aufweist:
Senden der Standortmessungen an den Standortserver; und
Empfangen der Standortschätzung von dem Standortserver.

4. Verfahren nach Anspruch 1, das weiter Folgendes aufweist:
Detektieren eines AP, der nicht in dem zweiten Satz von APs ist; und
Senden einer Identität des detektierten AP an den Standortserver.

5. Verfahren nach Anspruch 1, das weiter Folgendes aufweist:
Versagen einen AP in dem zweiten Satz von APs zu detektieren; und
Senden einer Identität des nicht detektierten AP an den Standortserver.

6. Verfahren nach Anspruch 1, wobei der zweite Satz von APs ein Subsatz des ersten Satzes von APs ist.

7. Verfahren nach Anspruch 1, wobei der zweite Satz von APs wenigstens einen AP beinhaltet, der nicht in dem ersten Satz von APs ist; und das vorzugweise
weiter Folgendes aufweist:
Senden einer Anfrage nach Assistenz- bzw. Hilfsdaten an den Standortserver für den wenigstens einen AP, der nicht in dem zweiten Satz von APs ist; und
Empfangen von Assistenzdaten von dem Standortserver für den wenigstens einen AP.

8. Verfahren nach Anspruch 1, wobei die Beziehungen weiter eine Gruppe von APs aufweisen.

9. Eine Mobileinrichtung (100) zum Bestimmen einer Positionsbestimmung bzw.
einer Positionsfestlegung in einem Drahtlosnetzwerk, wobei die Mobileinrichtung Folgendes aufweist:
Mittel zum Empfangen von Assistenz- bzw. Hilfsdaten von einem Standortserver für einen ersten Satz von Zugriffspunkten bzw. APs (AP = access point) (230), wobei die Assistenzdaten Beziehungen für die APs aufweisen, wobei die Beziehungen Folgendes aufweisen:
eine Verbindung von einem AP zu einem anderen AP;
eine Assoziation eines AP zu einer Makrozelle, oder
eine Kombination davon;
Mittel zum Bestimmen von Standortinformation für die Mobileinrichtung; Mittel zum Bestimmen eines zweiten Satzes von APs basierend auf den Beziehungen und der Standortinformation;
Mittel zum Erlangen von Standortmessungen für den zweiten Satz von APs; und
Mittel zum Bestimmen einer Standortschätzung basierend auf den Standortmessungen.

10. Verfahren in einem Standortserver (240) zum Vorsehen von Assistenz- bzw. Hilfsdaten für Zugriffspunkte bzw. APs (AP = access point) (230) an eine Mobileinrichtung (100), wobei das Verfahren Folgendes aufweist:
Bestimmen (510) eines ersten Satzes von APs,
Bestimmen (520) von Beziehungen für den ersten Satz von APs, wobei die Beziehungen Folgendes aufweisen:
eine Verbindung von einem AP zu einem anderen AP,
eine Assoziation eines AP zu einer Makrozelle, oder
eine Kombination davon; und
Senden (530) von Assistenzdaten an die Mobileinrichtung für den ersten Satz von APs, wobei die Assistenzdaten die Beziehungen aufweisen.

11. Verfahren nach Anspruch 10, das weiter Folgendes aufweist:
Empfangen von Standortinformation von der Mobileinrichtung; und
Bestimmen des ersten Satzes von APs basierend auf der Standortinformation.

12. Verfahren nach Anspruch 11, wobei die Standortinformation Folgendes aufweist:
eine ungefähre Standortschätzung,
Standortmessungen,
eine Identität eines AP,
eine Identität einer Makrozelle, oder
eine Kombination davon.

13. Verfahren nach Anspruch 10, wobei die Beziehungen in einer Datenbank in dem Standortserver gespeichert sind; und das vorzugsweise weiter Folgendes aufweist:
Empfangen einer Identität von:
einem detektierten AP,
einem von der Mobileinrichtung nicht detektierten AP, oder
einer Kombination davon; und
Aktualisieren einer Datenbank basierend auf der Identität.

14. Verfahren nach Anspruch 1 oder 10, wobei die Assistenzdaten weiter Folgendes aufweisen:
Standortkoordinaten für einen AP,
unterstützte Funktechnologien für einen AP,
unterstützte Frequenzen für einen AP,
unterstützte Kanäle für einen AP,
eine Adresse für einen AP,
eine Verbindung von einem AP zu einem anderen AP,
eine Gruppe von APs,
eine Assoziation eines AP mit einer Makrozelle, oder
eine Kombination davon; und/oder
wobei wenigstens ein AP in dem ersten Satz von APs Drahtloskommunikation unterstützt unter Verwendung von:
GSM,
W-CDMA,
LTE,
cdma2000,
WiFi,
Bluetooth, oder
einer Kombination davon.

15. Ein Standortserver (240) zum Vorsehen von Assistenz- bzw. Hilfsdaten für Zugriffspunkte bzw. APs (AP = access point) (230) an eine Mobileinrichtung (100), wobei der Standortserver Folgendes aufweist:
Mittel zum Bestimmen eines ersten Satzes von APs,
Mittel zum Bestimmen von Beziehungen für den ersten Satz von APs, wobei die Beziehungen Folgendes aufweisen:
eine Verbindung von einem AP zu einem anderen AP,
eine Assoziation eines AP zu einer Makrozelle, oder
eine Kombination davon; und
Mittel zum Senden von Assistenzdaten an die Mobileinrichtung für den ersten Satz von APs, wobei die Assistenzdaten die Beziehungen aufweisen.

## Revendications

1. Procédé dans un dispositif mobile (100) pour déterminer un relevé de position à partir d'un réseau sans fil, le procédé comprenant :
recevoir (410) des données d'assistance à partir d'un serveur de localisation (240) pour un premier ensemble de points d'accès (230), AP, les données d'assistance comprenant des relations pour les AP, les relations comprenant :
une liaison d'un AP à un autre AP,
une association d'un AP à une macro-cellule,
une combinaison de cela ;
déterminer (420) des informations d'emplacement pour le dispositif mobile ;
déterminer (430) un deuxième ensemble d'AP sur la base des relations et des informations d'emplacement ;
obtenir (440) des mesures d'emplacement pour le deuxième ensemble d'AP ; et
déterminer (450) une estimation d'emplacement sur la base des mesures d'emplacement.

2. Procédé selon la revendication 1, dans lequel les informations d'emplacement comprennent :
une estimation d'emplacement approximative,
un AP détecté,
une macro-cellule détectée, ou
une combinaison de cela.

3. Procédé selon la revendication 1, dans lequel la détermination de l'estimation d'emplacement comprend :
envoyer les mesures d'emplacement au serveur de localisation ; et
recevoir l'estimation d'emplacement à partir du serveur de localisation.

4. Procédé selon la revendication 1, comprenant en outre :
détecter un AP qui n'est pas dans le deuxième ensemble d'AP ; et
envoyer une identité de l'AP détecté au serveur de localisation.

5. Procédé selon la revendication 1, comprenant en outre :
échouer à détecter un AP dans le deuxième ensemble d'AP ; et
envoyer au serveur de localisation une identité de l'AP non détecté.

6. Procédé selon la revendication 1, dans lequel le deuxième ensemble d'AP est un sous-ensemble du premier ensemble d'AP.

7. Procédé selon la revendication 1, dans lequel le deuxième ensemble d'AP comprend au moins un AP qui n'est pas dans le premier ensemble AP ; et de préférence
comprenant en outre :
envoyer une requête pour demander des données d'assistance au serveur de localisation pour ledit au moins un AP qui n'est pas dans le deuxième ensemble d'AP ; et
recevoir des données d'assistance à partir du serveur de localisation pour ledit au moins un AP.

8. Procédé selon la revendication 1, dans lequel les relations comprennent en outre un groupe d'AP.

9. Dispositif mobile (100) pour déterminer un relevé de position dans un réseau sans fil, le dispositif mobile comprenant :
des moyens pour recevoir des données d'assistance à partir d'un serveur de localisation pour un premier ensemble de points d'accès (230), AP, les données d'assistance comprenant des relations pour les AP, les relations comprenant :
une liaison d'un AP à un autre AP,
une association d'un AP à une macro-cellule,
une combinaison de cela ;
des moyens pour déterminer des informations d'emplacement pour le dispositif mobile,
des moyens pour déterminer un deuxième ensemble d'AP sur la base des relations et des informations d'emplacement ;
des moyens pour obtenir des mesures d'emplacement pour le deuxième ensemble d'AP ; et
des moyens pour déterminer une estimation d'emplacement sur la base des mesures d'emplacement.

10. Procédé dans un serveur de localisation (240) pour fournir, à un dispositif mobile (100), des données d'assistance pour des points d'accès, AP, (230), le procédé comprenant :
déterminer (510) un premier ensemble d'AP ;
déterminer (520) des relations pour le premier ensemble d'AP, les relations comprenant :
une liaison d'un AP à un autre AP,
une association d'un AP à une macro-cellule, ou
une combinaison de cela ; et
envoyer (530) des données d'assistance au dispositif mobile pour le premier ensemble d'AP, les données d'assistance comprenant lesdites relations.

11. Procédé selon la revendication 10, comprenant en outre :
recevoir des informations d'emplacement à partir du dispositif mobile ; et
déterminer le premier ensemble d'AP sur la base des informations d'emplacement.

12. Procédé selon la revendication 11, dans lequel les informations d'emplacement comprennent :
une estimation d'emplacement approximative,
des mesures d'emplacement,
une identité d'un AP,
une identité d'une macro-cellule, ou
une combinaison de cela.

13. Procédé selon la revendication 10, dans lequel les relations sont mémorisées dans une base de données dans le serveur de localisation ; et de préférence
comprenant en outre :
recevoir une identité de :
un AP détecté,
un AP non détecté à partir du dispositif mobile,
une combinaison de cela ; et
mettre à jour la base de données sur la base de l'identité.

14. Procédé selon la revendication 1 ou 10, dans lequel les données d'assistance comprennent en outre :
des coordonnées d'emplacement pour un AP,
des technologies radio supportées pour un AP,
des fréquences supportées pour un AP,
des canaux supportés pour un AP,
une adresse pour un AP,
une liaison d'un AP à un autre AP,
un groupe d'AP,
une association d'un AP à une macro cellule, ou
une combinaison de cela ; et/ou
dans lequel au moins un AP se trouvant dans le premier ensemble d'AP supporte des communications sans fil utilisant :
GSM,
W-CDMA,
LTE,
cdma2000,
Wi-Fi,
Bluetooth, ou
une combinaison de cela.

15. Serveur de localisation (240) pour fournir, à un dispositif mobile (100), des données d'assistance pour des points d'accès, AP, (230), le serveur de localisation comprenant
des moyens pour déterminer un premier ensemble d'AP ; des moyens pour déterminer des relations pour le premier ensemble d'AP, les relations comprenant :
une liaison d'un AP à un autre AP,
une association d'un AP à une macro-cellule, ou
une combinaison de cela ; et
des moyens pour envoyer des données d'assistance au dispositif mobile pour le premier ensemble d'AP, les données d'assistance comprenant lesdites relations.
